# EUROPEAN PATENT APPLICATION

(11) **EP 4 468 626 A1**
(43) Date of publication of application: **27.11.2024**
(21) Application number: 24754542.9
(22) Date of filing: 08.01.2024
(51) Int. Cl.: H04B 7/185, H04W 4/021

(54) **COMMUNICATION SYSTEM AND METHOD, AND TERMINAL DEVICE**

(30) Priority: 15.03.2023 CN 202310287722
(71) Applicant: Huawei Technologies Co., Ltd., Shenzhen, Guangdong 518129 (CN)
(72) Inventor: LI, Zhaoyang, Shenzhen, Guangdong 518129 (CN); TIAN, Yuanyuan, Shenzhen, Guangdong 518129 (CN); ZHANG, Shiming, Shenzhen, Guangdong 518129 (CN); WANG, Dongxu, Shenzhen, Guangdong 518129 (CN)
(74) Representative: Pfenning, Meinig & Partner mbB
(86) International application number: PCT/CN2024/071021
(87) International publication number: WO 2024/187932

(57) **Abstract**

Embodiments of this application provide a communication system and method, and a terminal device, so that a terminal device in a state without a network connection can send a satellite message, and also actively query and receive a satellite message, to extend an application scenario of the satellite message and improve communication assurance for a user. The system may include at least a first terminal device and a server. The server may store at least one satellite message sent to the first terminal device. In response to an operation that the user requests to receive a satellite message, the first terminal device sends a query request packet to the server through a satellite. When finding at least one satellite message based on a user identifier on the first terminal device, the server returns a first satellite message in the at least one satellite message to the first terminal device. In this way, the first terminal device may receive a to-be-received satellite message in an active query manner.

## Description

### CROSS-REFERENCE TO RELATED APPLICATIONS

This application claims priority to Chinese Patent Application No. 202310287722.9, filed with the China National Intellectual Property Administration on March 15, 2023 and entitled "COMMUNICATION SYSTEM AND METHOD, AND TERMINAL DEVICE", which is incorporated herein by reference in its entirety.

### TECHNICAL FIELD

This application relates to the field of terminal technologies, and in particular, to a communication system and method, and a terminal device.

### BACKGROUND

With development and progress of technologies, functions of a terminal device are gradually improved and enriched. A mobile phone is used as an example. Currently, more mobile phones have a BeiDou short packet communication service function, and can provide communication assurance for users in an environment without a network. In addition, with development of an instant messaging technology, in addition to receiving a BeiDou short packet by using an SMS message service, a receiver device may further receive the BeiDou short packet by using the instant messaging technology.

Due to limitations of factors such as use, resources, or costs of a BeiDou satellite, currently, satellite communication only implements sending, by a transmitter device, a BeiDou short packet in an environment without a network and receiving, by a receive end, the BeiDou short packet in an environment with a network. Therefore, how to extend an application scenario of the BeiDou short packet is of research significance.

### SUMMARY

This application provides a communication system and method, and a terminal device, so that a terminal device in a state without a network connection can send a satellite message, and also actively query and receive a satellite message, to extend an application scenario of the satellite message and improve communication assurance for a user.

According to a first aspect, an embodiment of this application provides a communication system. The system includes a first terminal device and a server, where the first terminal device is in a state without a network connection. The first terminal device is configured to send a first request packet to a satellite in response to a first operation on a first control (which may also be referred to as a "message receiving" control or the like in this embodiment of this application) included in a first interface, where the first request packet (which may also be referred to as a "letter query request packet" or the like in this embodiment of this application) is used to obtain a satellite message to be received by the first terminal device. The server is configured to receive the first request packet from the first terminal device through the satellite, where the first request packet includes a user identifier corresponding to the first terminal device. The server is further configured to: find at least one stored satellite message based on the user identifier, and return a first satellite message in the at least one satellite message to the first terminal device through the satellite. The first terminal device is further configured to: receive a first downlink packet sent by the satellite, where the first downlink packet includes the first satellite message; and display a second interface based on the first downlink packet, where the first satellite message is displayed in the second interface. It may be understood that message content obtained after the first satellite message is decoded is displayed in the second interface, for example, may include but is not limited to text content, location information, and the like. In some embodiments, the user identifier corresponding to the first terminal device may include but is not limited to a user number, a device identifier, and the like. In some embodiments, the second interface may be an update interface of the first interface, and may also be understood as that the first terminal device updates and displays a received satellite message in the first interface. In addition, it may be understood that the first terminal device may be understood as a transmitter device, a rescuee device, or the like in a satellite communication scenario.

In the system, the first terminal device in the state without a network connection may receive a to-be-received satellite message in an active query manner. The first control used to receive the satellite message is provided in the interface of the first terminal device, and a user may actively tap the first control. In this way, the first terminal device may send the letter query request packet to the satellite, to query the server whether a message sent to the first terminal device is stored. When finding a satellite message that needs to be received by the first terminal device, the server may return the satellite message to the first terminal device through the satellite. Therefore, the system can be extended to enable the first terminal device to receive the satellite message, thereby improving communication assurance for the user.

In some embodiments, after responding to the first operation on the first control included in the first interface, the first terminal device may display an indication interface used to search for the satellite, where the indication interface indicates to adjust a device posture of the first terminal device; and detect, in the indication interface, that the device posture of the first terminal device meets a device posture requirement for sending a second request packet to the satellite. For example, the first terminal device may obtain an ephemeris of the satellite, determine a satellite and a motion track of the satellite based on the ephemeris, and determine a device posture requirement based on the ephemeris. In this way, the first terminal device indicates the user to adjust the device posture, so that a direction range in which a terminal device sends a request packet can be aligned with a receiving direction range of the satellite. In addition, after detecting that the device posture meets the requirement, the first terminal device may further search for the satellite by using at least one of a frequency band, a power, and other information, so that a communication link between the first terminal device and the satellite can be established after the satellite is found, and the first terminal device can receive, based on the communication link, the first downlink packet delivered by the satellite.

In some embodiments, the first satellite message may be a message that has earliest storage time, a message with a highest priority, or the like. For example, the message with the highest priority may be a message of an emergency contact.

In a possible design, the first downlink packet further includes quantity indication information, the quantity indication information indicates a quantity of remaining to-be-received satellite messages, and the quantity indication information is further displayed in the second interface.

In this design, when the server finds a plurality of satellite messages that need to be received by the first terminal device, in addition to returning one of the satellite messages to the first terminal device, the server may further indicate a quantity of remaining satellite messages to be received by the first terminal device. In this way, the first terminal device may display the quantity indication information to the user, so that the user continues to receive another to-be-received satellite message, thereby improving communication timeliness.

In a possible design, the first interface further includes a second satellite message, and the second satellite message indicates a satellite message sent by the first terminal device to at least one recipient; the first satellite message is a reply message of a second terminal device corresponding to a first recipient for the second satellite message, and the first recipient is any one of the at least one recipient; and that the first satellite message is displayed in the second interface includes: the first satellite message is associatively displayed in the second interface based on the second satellite message. In some embodiments, an associated display manner may be, for example, overlay display.

In this design, the satellite message received by the first terminal device may be a reply message of the second terminal device. Based on that the first terminal device sends the satellite message to the second terminal device, the second terminal device may reply to the satellite message, and the first terminal device may receive the reply message of the second terminal device. In addition, when displaying the reply message, the first terminal device performs associated display with the sent satellite message, so that an association relationship between messages can be intuitively viewed, to improve use experience of the user.

In some embodiments, when the first terminal device sends a satellite message to a plurality of recipients, the satellite message may be displayed in one interface. Similarly, when the first terminal device receives reply messages of the plurality of recipients, the reply messages may also be updated and displayed in the interface. It may be understood that in this case, the satellite message may be displayed, for example, in a form of a unified chat window, for example, a service account, a subscription account, or an official account. In some other embodiments, when the first terminal device sends a satellite message to a plurality of recipients, the satellite message may be displayed in different interfaces. For example, one recipient may correspond to one chat window interface. Similarly, when receiving reply messages from the plurality of recipients, the first terminal device may also update and display a chat window interface corresponding to a recipient.

In a possible design, the system further includes the second terminal device. The second terminal device is configured to display a third interface, where the second satellite message from the first terminal device and a second control (which may also be referred to as a "reply" control or the like in this embodiment of this application) are displayed in the third interface, and the second control is used to reply to the second satellite message. The second terminal device is further configured to display a fourth interface in response to a second operation on the second control, where the fourth interface is used to obtain reply content for the second satellite message. The second terminal device is further configured to send a reply message in response to one or more third operations in the fourth interface, where the reply message includes the reply content. The server is configured to receive and store the reply message from the second terminal device, where the reply message includes the user identifier corresponding to the first terminal device. For example, the user identifier may be a user number. It may be understood that, in the reply message, the user number of the first terminal device may be used as a recipient number, to return a message to the first terminal device. It may be understood that the second terminal device may be understood as a receiver device, a rescuer device, or the like in the satellite communication scenario. In some embodiments, the one or more third operations may include at least one reply editing operation and an operation on a control used to indicate to confirm sending of the reply message, for example, a sending control. In some other embodiments, the one or more third operations may alternatively be an operation performed by the user on a preset reply included in a reply area.

In this design, when displaying the received satellite message, the second terminal device may display the second control (which may also be referred to as the reply control or the like) corresponding to the satellite message. In this way, the user may reply to the satellite message by using the reply control, so that a scenario of replying to the satellite message can be extended, and communication assurance for the user can be improved.

In a possible design, that the second terminal device is configured to send a reply message includes: sending the reply message through the satellite; and that the server is configured to receive the reply message from the second terminal device includes: receiving the reply message from the second terminal device through the satellite.

In this design, the second terminal device may also be in the state without a network connection or a state with a network connection. When the second terminal device is in the state without a network connection, the second terminal device may send the reply message to the satellite, and the satellite sends the reply message to the server. In this way, the receiver device can also reply to the received satellite message, so that the scenario of replying to the satellite message can be extended, and communication assurance for the user can be improved. In some embodiments, the third interface further includes a third control, the third control may be used by the second terminal device to send a second request packet to the satellite when the second terminal device is in the state without a network connection, and the second request packet is used to obtain a satellite message to be received by the second terminal device.

It may be understood that the second terminal device is in the state with a network connection, and the second terminal device may send the reply message to the server by using a communication network.

In a possible design, the third interface is an interface of an instant messaging application (application, APP), and the second control is used to jump to the fourth interface provided by the instant messaging APP.

In this design, the second terminal device may receive, by using the instant messaging APP, the satellite message sent by the first terminal device. Therefore, the second terminal device may also reply to the satellite message by using the instant messaging APP. In this way, a reply scenario in which the instant messaging APP is used can be extended, and communication assurance for the user can be improved.

In some embodiments, the instant messaging APP may display, in a form of a message card, text content, or the like, the satellite message received by the second terminal device. For example, when a message card form is used, for example, the second control may be displayed in the message card. When a text content form is used, for example, the second control may be displayed in a link form or in a reference form, where reference display may be, for example, displaying the second control by detecting and responding to an operation on the text content.

In a possible design, the second satellite message further includes indication information, and the indication information indicates that the first terminal device has a satellite message receiving capability; and the displaying a third interface includes: displaying the second control based on the indication information. In some embodiments, when the indication information is indicated as 1, it may indicate that the first terminal device has the satellite message receiving capability. When the indication information is indicated as 0, it may indicate that the first terminal device does not have the satellite message receiving capability. In some other embodiments, in a scenario in which the second satellite message does not include the indication information, it may be determined, based on a communication protocol or a pre-configuration, that the first terminal device has the satellite message receiving capability by default.

In this design, the second terminal device may implement interface display based on whether the first terminal device supports receiving of the satellite message, so that a more accurate communication scenario can be implemented, and a communication failure can be avoided. In addition, the second terminal device may match and display a corresponding reply control in the third interface used to display the received satellite message.

In a possible design, the third interface is an interface of a messaging APP; the second control is used to jump to the fourth interface provided in a web page form, where a web page interface is, for example, an H5 interface; and the sending a reply message in response to one or more third operations in the fourth interface includes: displaying a fifth interface in response to the one or more third operations in the fourth interface, where the fifth interface indicates to perform identity verification by using a number of a recipient that receives the second satellite message; detecting success of the verification, and sending the reply message in response to success of the verification.

In this design, the second terminal device may receive, by using the messaging APP, the satellite message sent by the first terminal device. Therefore, the second terminal device may also reply to the satellite message by using the messaging APP. In this way, a reply scenario in which the messaging APP is used can be extended, and communication assurance for the user can be improved. In addition, accuracy and security of communication may be provided by verifying a recipient phone number in the web page interface.

In some embodiments, the messaging APP may also display, in the form of the message card, the text content, or the like, the satellite message received by the second terminal device. For example, when the text content form is used, for example, the second control may be displayed in a link form or in a reference form, where reference display may be, for example, displaying the second control by detecting and responding to an operation on the text content. When the message card form is used, for example, the second control may be displayed in the message card.

In a possible design, the second satellite message further includes indication information, and the indication information indicates that the first terminal device has a satellite message receiving capability; and the displaying a third interface includes: displaying the second control based on the indication information.

In this design, the second terminal device may implement interface display based on whether the first terminal device supports receiving of the satellite message, so that a more accurate communication scenario can be implemented, and a communication failure can be avoided. In some embodiments, the second terminal device may match and display a corresponding reply control in the third interface used to display the received satellite message. In some other embodiments, the server may also generate, based on the indication message in the second satellite message, a link used for replying, where the link and the second satellite message are sent to the second terminal device together, and the second terminal device displays the second satellite message and the reply link.

In some other embodiments, the second terminal device may separately display the third interface by using the instant messaging APP and the messaging APP. In this way, more usage scenarios may be provided for the user. The user may view the received satellite message and reply to the satellite message by using the instant messaging APP, or may view the received satellite message and reply to the satellite message by using the messaging APP, thereby improving use experience of the user.

In a possible design, the first satellite message is a BeiDou satellite message.

According to a second aspect, an embodiment of this application further provides a communication method. The method may be applied to a first terminal device. When the first terminal device is in a state without a network service, the method includes: sending a first request packet to a satellite in response to a first operation on a first control included in a first interface, where the first request packet is used to obtain a BeiDou satellite message to be received by the first terminal device; receiving a first downlink packet delivered by the satellite, where the first downlink packet includes the first satellite message; and displaying a second interface based on the first downlink packet, where the first satellite message is displayed in the second interface.

In a possible design, the first downlink packet further includes quantity indication information, the quantity indication information indicates a quantity of remaining to-be-received satellite messages, and the quantity indication information is further displayed in the second interface.

In a possible design, the first interface further includes a second satellite message, and the second satellite message indicates a satellite message sent by the first terminal device to at least one recipient; the first satellite message is a reply message of a second terminal device corresponding to a first recipient for the second satellite message, and the first recipient is any one of the at least one recipient; and that the first satellite message is displayed in the second interface includes: the first satellite message is associatively displayed in the second interface based on the second satellite message.

In a possible design, the second satellite message further includes indication information, and the indication information indicates that the first terminal device has a satellite message receiving capability.

In a possible design, the first satellite message is a BeiDou satellite message.

According to a third aspect, an embodiment of this application further provides a communication method. The method may be applied to a server. The server receives a first request packet from a first terminal device through a satellite, where the first request packet includes a user identifier corresponding to the first terminal device. The server finds at least one stored satellite message based on the user identifier corresponding to the first terminal device, and returns a first satellite message in the at least one satellite message to the first terminal device through the satellite.

In a possible design, before the server receives the first request packet from the first terminal device through the satellite, the method further includes: receiving and storing a reply message from a second terminal device, where the reply message includes the user identifier corresponding to the first terminal device.

In another possible design, the server may further receive and store a message sent by the first terminal device to the second terminal device, where the message includes the user identifier corresponding to the first terminal device. It may be understood that the message received by the server from the second terminal device may be a reply message sent by the second terminal device to the first terminal device, or may be a message sent by the second terminal device to the first terminal device. This is not limited in this application.

According to a fourth aspect, an embodiment of this application further provides another communication method. The method may be applied to a second terminal device, and includes: displaying a first interface, where a first satellite message from a first terminal device and a first control are displayed in the first interface, and the first control is used to reply to the first satellite message; displaying a second interface in response to a first operation on the first control, where the second interface is used to obtain reply content for the first satellite message; and sending a reply message in response to one or more second operations in the second interface, where the reply message includes the reply content. In some embodiments, the one or more second operations may include at least one reply editing operation and an operation on a sending control. In some other embodiments, the one or more second operations may alternatively be an operation performed by a user on a preset reply included in a reply area.

In a possible design, the sending a reply message includes: sending the reply message through a satellite.

In a possible design, the first interface is an interface of an instant messaging application APP, the first control is used to jump to the second interface provided by the instant messaging APP, the first interface further includes a third control, the third control is used to send a first request packet to the satellite, and the first request packet is used to obtain a satellite message to be received by the second terminal device.

In a possible design, the first satellite message further includes indication information, and the indication information indicates that the first terminal device has a satellite message receiving capability; and the displaying a first interface includes: displaying the first control based on the indication information.

In a possible design, the first interface is an interface of a messaging APP; the first control is used to jump to the second interface provided in a web page form; and the sending a reply message in response to one or more second operations in the first interface includes: displaying a third interface in response to the one or more second operations in the first interface, where the third interface indicates to perform identity verification by using a number of a recipient that receives the first satellite message; detecting success of the verification, and sending the reply message in response to success of the verification.

In a possible design, the first satellite message further includes indication information, and the indication information indicates that the first terminal device has a satellite message receiving capability; and the displaying a first interface includes: displaying the first control based on the indication information.

In a possible design, the first control is in a link form.

In a possible design, the first satellite message is a BeiDou satellite message.

According to a fifth aspect, an embodiment of this application further provides a terminal device. The terminal device includes a memory and one or more processors. The memory is configured to store computer program code, and the computer program code includes computer instructions. When the computer instructions are executed by the processor, the terminal device is enabled to perform the method performed by the first terminal device in any possible design of the second aspect, or the terminal device is enabled to perform the method performed by the second terminal device in any possible design of the fourth aspect.

According to a sixth aspect, an embodiment of this application further provides a terminal device. The terminal device includes modules/units for performing the method in any possible design of the second aspect or the fourth aspect. These modules/units may be implemented by hardware, or may be implemented by hardware by executing corresponding software.

In some embodiments, the terminal device may include a communication module, a processing module, and a display module. The processing module may be configured to respond to a first operation on a first control included in a first interface. The communication module may be configured to send a first request packet to a satellite, where the first request packet is used to obtain a BeiDou satellite message to be received by the first terminal device. The communication module may be further configured to receive a first downlink packet delivered by the satellite, where the first downlink packet includes the first satellite message. The display module may be configured to display a second interface based on the first downlink packet, where the first satellite message is displayed in the second interface.

In some other embodiments, the terminal device may include a communication module, a processing module, and a display module. The display module may be configured to display a first interface, where a first satellite message from the first terminal device and a first control are displayed in the first interface, and the first control is used to reply to the first satellite message. The processing module may be configured to respond to a first operation on the first control. The display module may be further configured to display a second interface, where the second interface is used to obtain reply content for the second satellite message. The processing module may be further configured to respond to one or more second operations in the second interface. The communication module is configured to send a reply message, where the reply message includes the reply content.

According to a seventh aspect, an embodiment of this application further provides a server, where the server includes a memory and one or more processors, the memory is configured to store computer program code, the computer program code includes computer instructions, and when the computer instructions are executed by the processor, the server is enabled to perform the method performed by the server in any possible design of the third aspect.

According to an eighth aspect, an embodiment of this application further provides a server. The server includes modules/units for performing the method in any possible design of the third aspect. These modules/units may be implemented by hardware, or may be implemented by hardware by executing corresponding software. In some embodiments, the server may include a communication module and a processing module. The communication module may be configured to receive a first request packet from a first terminal device through a satellite, where the first request packet includes a user identifier corresponding to the first terminal device. The processing module may be configured to find at least one stored satellite message based on the user identifier corresponding to the first terminal device. The communication module may be further configured to return a first satellite message in the at least one satellite message to the first terminal device through the satellite.

According to a ninth aspect, a computer-readable storage medium is provided. The computer-readable medium stores a computer program (which may also be referred to as code or instructions). When the computer program is run on a computer, the computer is enabled to perform the method in any possible design of the second aspect, perform the method in any possible design of the third aspect, or perform the method in any possible design of the fourth aspect.

According to a tenth aspect, a computer program product is provided. The computer program product includes a computer program (which may also be referred to as code or instructions). When the computer program is run, a computer is enabled to perform the method in any possible design of the second aspect, perform the method in any possible design of the third aspect, or perform the method in any possible design of the fourth aspect.

According to an eleventh aspect, a graphical user interface on a terminal device is further provided. The terminal device has a display, one or more memories, and one or more processors. The one or more processors are configured to execute one or more computer programs stored in the one or more memories. The graphical user interface includes a graphical user interface displayed when a first terminal device performs any possible implementation of the second aspect of embodiments of this application; or the graphical user interface includes a graphical user interface displayed when a second terminal device performs any possible implementation of the fourth aspect of embodiments of this application.

According to a twelfth aspect, this application further provides a chip. The chip is configured to read a computer program stored in a memory, to perform the method performed by the terminal device in any one of the foregoing aspects and the possible designs of the foregoing aspects.

According to a thirteenth aspect, this application further provides a chip system. The chip system includes a processor, configured to support a computer apparatus in implementing the method performed by the terminal device in any one of the foregoing aspects and the possible designs of the foregoing aspects. In a possible design, the chip system further includes a memory, and the memory is configured to store a program and data that are necessary for the computer apparatus. The chip system may include a chip, or may include a chip and another discrete component.

It should be noted that, for beneficial effects of the designs of the terminal device provided in the second aspect to the thirteenth aspect of embodiments of this application, refer to the beneficial effects of any possible design of the first aspect. Details are not described herein again.

### BRIEF DESCRIPTION OF DRAWINGS

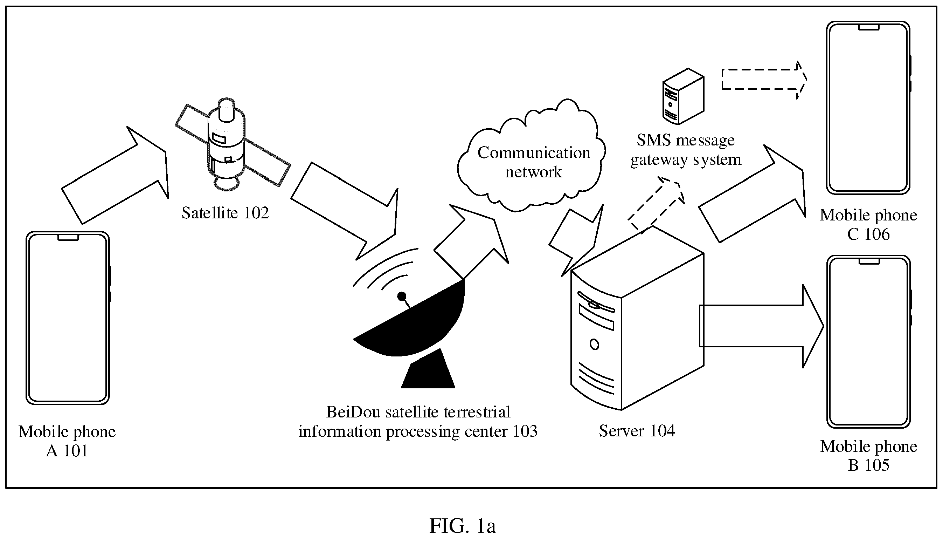

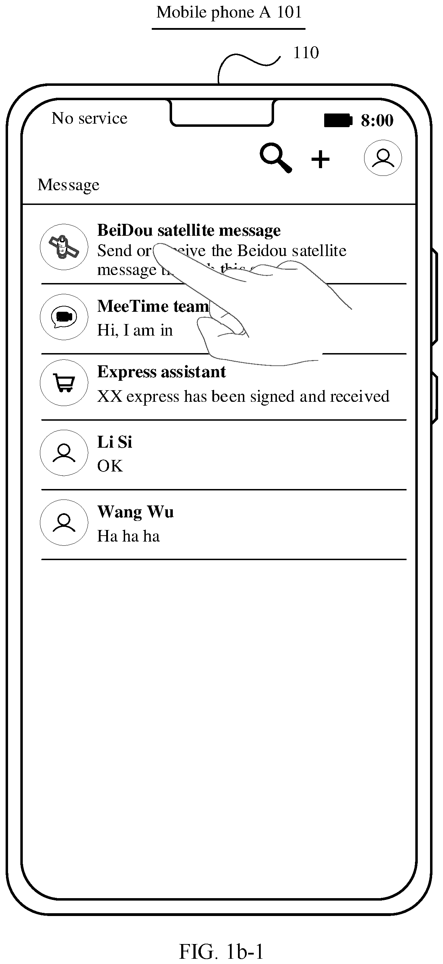

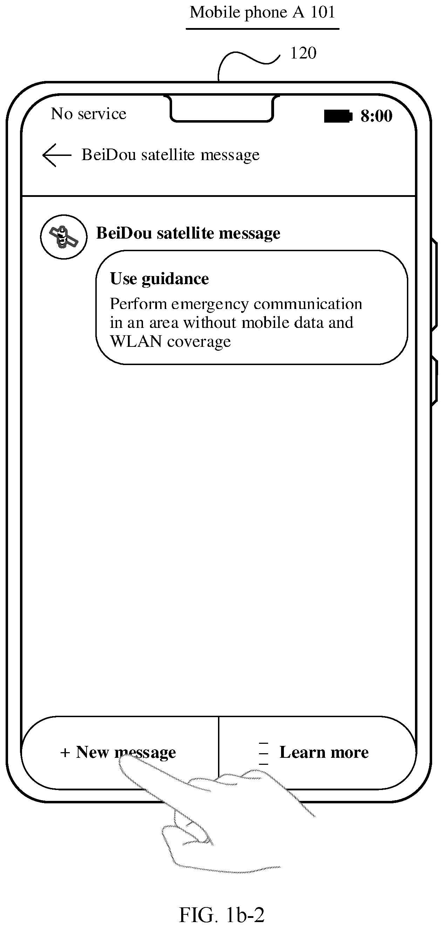

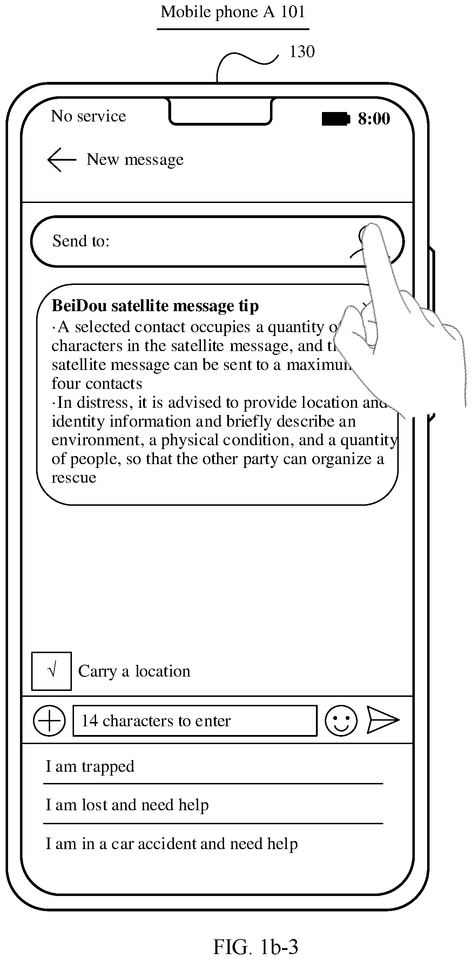

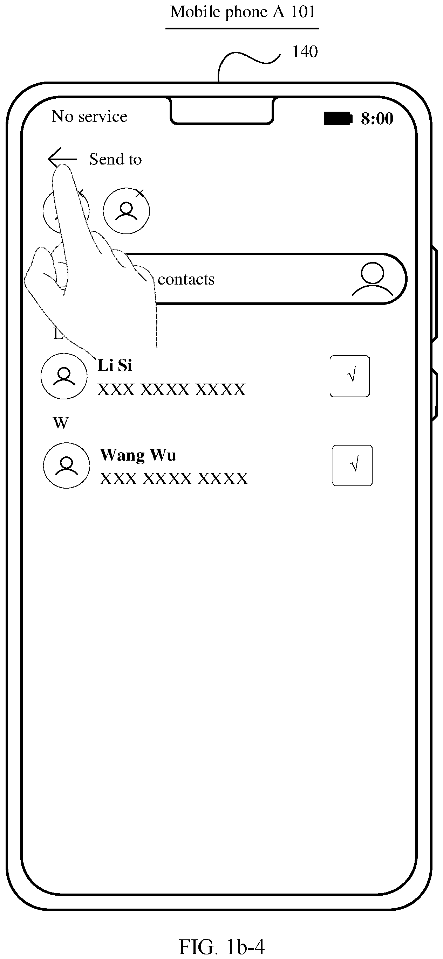

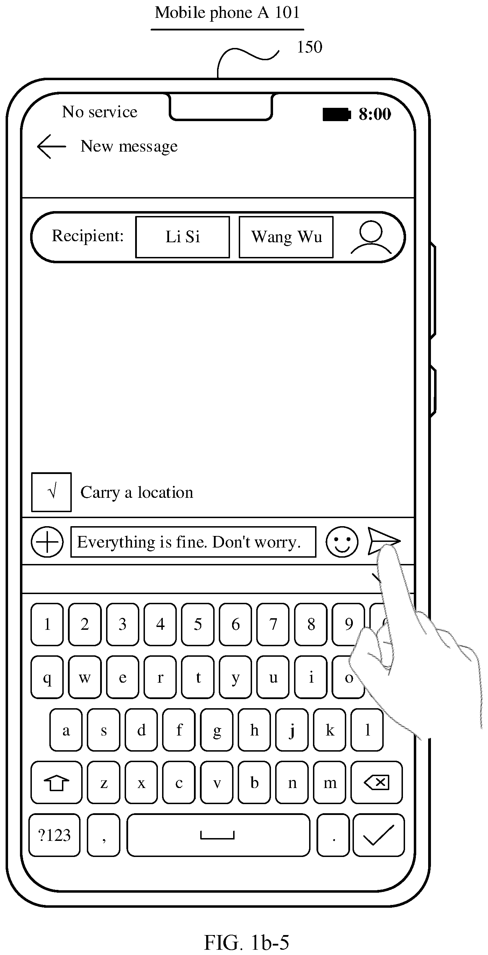

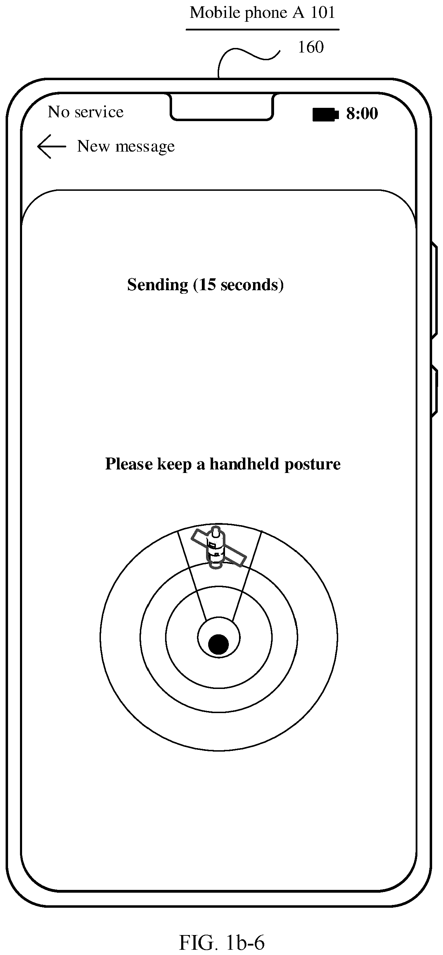

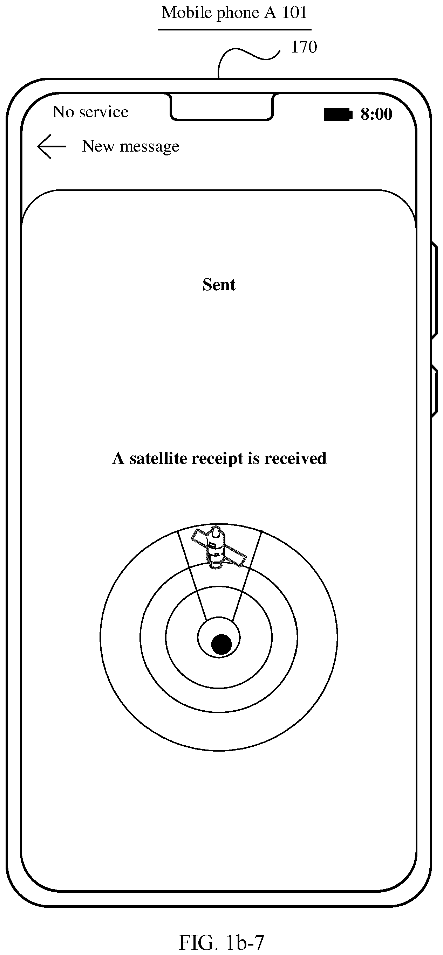

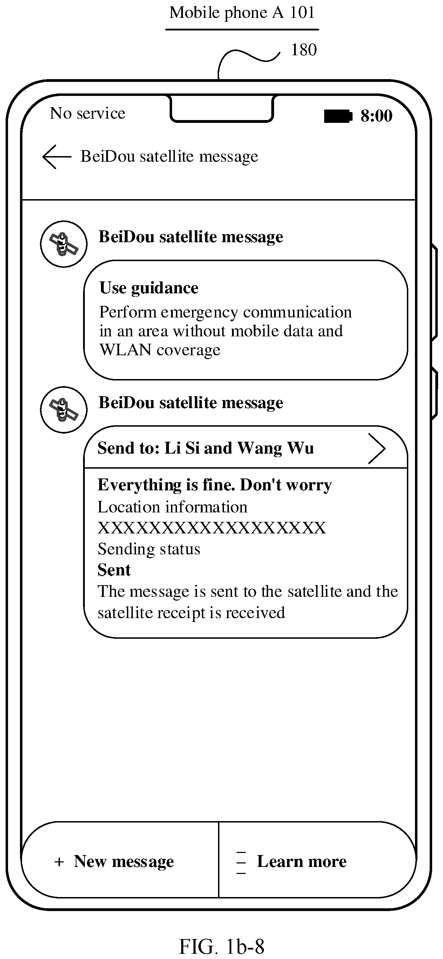

FIG. 1a is a diagram of an application scenario to which sending of a BeiDou short packet is applicable;
FIG. 1b-1 to FIG. 1b-8 are a diagram of an interface for sending a BeiDou short packet;
FIG. 1c is a diagram 1 of an interface for receiving a BeiDou short packet;
FIG. 1d is a diagram 2 of an interface for receiving a BeiDou short packet;
FIG. 2 is a diagram of a hardware architecture of a terminal device according to an embodiment of this application;
FIG. 3 is a block diagram of a software system architecture of a terminal device according to an embodiment of this application.
FIG. 4A to FIG. 4E are a diagram 1 of a reply interface of a BeiDou satellite message according to an embodiment of this application;
FIG. 5A to FIG. 5F are a diagram 2 of a reply interface of a BeiDou satellite message according to an embodiment of this application;
FIG. 6A to FIG. 6D are a diagram 1 of an interface for receiving a reply message according to an embodiment of this application;
FIG. 7 is a diagram of an application scenario to which a communication method is applicable according to an embodiment of this application;
FIG. 8 is a schematic interaction flowchart 1 of a communication method according to an embodiment of this application;
FIG. 9 is a schematic interaction flowchart 2 of a communication method according to an embodiment of this application;
FIG. 10 is a schematic interaction flowchart 3 of a communication method according to an embodiment of this application; and
FIG. 11 is a schematic interaction flowchart 4 of a communication method according to an embodiment of this application.

### DESCRIPTION OF EMBODIMENTS

The following describes in detail embodiments of this application with reference to the accompanying drawings.

Embodiments of this application may be applied to the field of terminal technologies, and may be specifically applied to an application scenario relating to satellite short packet communication. In the following embodiments, an example in which a satellite short packet is a BeiDou short packet is used. Implementation of a BeiDou-related technology and function may depend on a satellite, satellite networking, or the like, to implement communication, a service, and the like. Although development of a terrestrial communication technology can meet requirements of a large quantity of communication scenarios of a user, full coverage of a terrestrial communication network cannot be implemented. Therefore, in some areas in which the terrestrial communication network does not exist or cannot exist, communication may be implemented based on a BeiDou technology, and may be understood as a BeiDou short packet (which may also be referred to as a "BeiDou satellite message", a "BeiDou SMS message", or another name, which may be used interchangeably in embodiments of this application) communication service function. The function may implement communication through the satellite or the satellite networking.

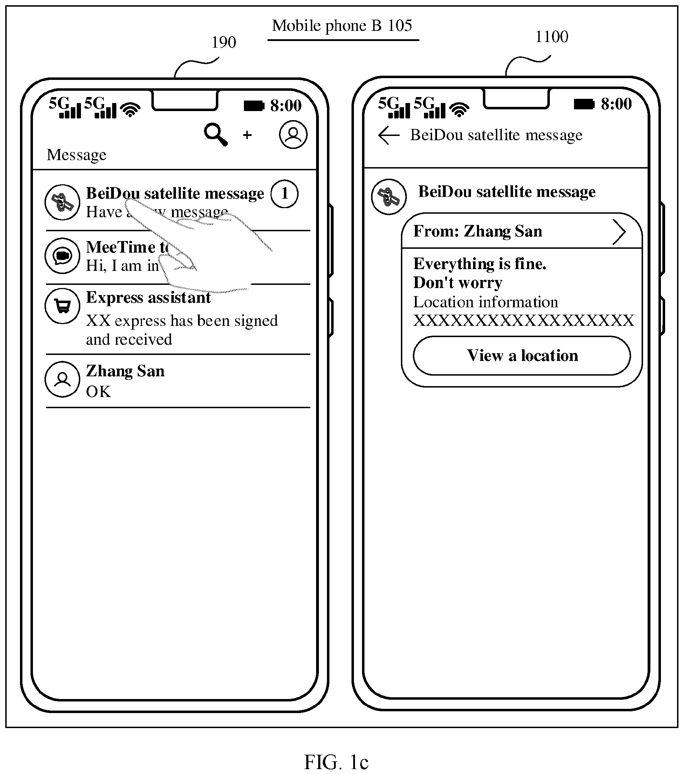

FIG. 1a is a diagram of an application scenario to which sending of a BeiDou short packet is applicable. It can be learned from FIG. 1a that the application scenario may include but is not limited to: a mobile phone A 101, a satellite 102, a BeiDou satellite terrestrial information processing center 103, a server 104, a mobile phone B 105, and a mobile phone C 106.
(1) The mobile phone A 101 may be configured to send information in a form of a BeiDou short packet in a state without a network connection, so as to ensure communication of the mobile phone in the state without a network connection. Optionally, the mobile phone A 101 may provide, by using an instant messaging application (application, APP), a capability of sending a BeiDou short packet, for example, a MeeTime application (application, APP). In another optional manner, the mobile phone A 101 may alternatively provide, by using an SMS message service, a capability of sending a BeiDou short packet, for example, an SMS message APP (also referred to as a "messaging APP", or the like, which may be used interchangeably in embodiments of this application). For example, the mobile phone A 101 may be understood as a mobile phone of Zhang San.
   When the mobile phone A 101 needs to send the BeiDou short packet, the mobile phone A 101 may interconnect with a BeiDou satellite based on a communication protocol, to implement message sending of the mobile phone A 101 in the state without a network connection. FIG. 1b-1 to FIG. 1b-8 are a diagram of an interface for sending a BeiDou short packet. In an example, the BeiDou short packet is sent by using the MeeTime APP on the mobile phone A 101. A user may tap a "BeiDou satellite message" card on a home page interface 110 of the MeeTime APP. The mobile phone A 101 displays an interface 120 in response to the operation. The interface 120 may include a "use guidance" card of a BeiDou satellite message, and may further include a "new message" control, a "learn more" control, and the like. The mobile phone A 101 may, in response to a tap operation of the user on the "new message" control, display an interface 130 used to create a BeiDou satellite message. The interface 130 may include a "BeiDou satellite message tip" card, and may further include a display area used to select an address book contact or enter a contact number as a recipient of the BeiDou satellite message, a control used to carry location information, a text box used to enter specific text content of the BeiDou satellite message, a frequently used expression of the BeiDou satellite message, and the like. The mobile phone may display an interface 140 in response to a tap operation on an address book contact selection control. The interface 140 may include a contact list stored in the mobile phone A 101. The mobile phone A 101 may, in response to an operation that the user selects a contact Li Si and a contact Wang Wu and returns to an interface for creating a BeiDou satellite message, update the interface 130 to display an interface 150. The interface 150 may include the contact Li Si and the contact Wang Wu that are selected by the user. The mobile phone displays an interface 160 in response to an editing operation that the user enters text content and a tap operation of a "sending" control. The interface 160 indicates to align a device posture of the mobile phone A 101 with the satellite, so that the mobile phone A 101 sends a message to the satellite in the form of the BeiDou short packet based on the communication protocol in the state without a network connection. For example, the interface 160 is used to display a sending interface of the BeiDou satellite message. The mobile phone A 101 may display an interface 170 in response to receiving of a receipt from the satellite. The interface 170 indicates that the BeiDou satellite message has been sent and the receipt from the satellite has been received. Finally, the mobile phone A 101 may display an interface 180. The interface 180 may be an update of the interface 120 after the BeiDou satellite message is sent. Compared with the interface 120, the interface 180 may further include a preview card used to display the sent BeiDou satellite message.
(2) The satellite 102 may receive the BeiDou satellite message sent by the mobile phone A 101, and may further forward the BeiDou satellite message to the BeiDou satellite terrestrial information processing center 103, to push the BeiDou satellite message to a server or a terminal device corresponding to a recipient.
(3) The BeiDou satellite terrestrial information processing center 103 may communicate with the satellite 102, and is configured to receive and send a satellite signal; and may further communicate with a terrestrial communication network or another terrestrial station, to forward the BeiDou satellite message received from the satellite 102 to the terrestrial communication network or the another terrestrial station or the server 104. For example, the BeiDou satellite terrestrial information processing center 103 may communicate with the server 104, to forward the BeiDou satellite message from the satellite 102 to the server 104. It may be understood that the server 104 may be a server corresponding to a recipient determined by the BeiDou satellite terrestrial information processing center 103 based on the BeiDou satellite message. The BeiDou satellite message may carry identifiers of one or more recipients, for example, an identifier of Li Si and an identifier of Wang Wu shown in FIG. 1b-1 to FIG. 1b-8.
(4) The server 104 may be configured to receive the BeiDou satellite message from the BeiDou satellite terrestrial information processing center 103 by using the communication network. Optionally, when the server 104 detects that the BeiDou satellite message is sent through an instant message channel, the server may detect whether a terminal device corresponding to a recipient has a capability of receiving the instant messaging message. For example, when the terminal device corresponding to the recipient has the capability of receiving the instant messaging message, the message may be pushed, through the instant message channel, to the terminal device corresponding to the recipient, for example, the mobile phone B 105 in FIG. 1a. Alternatively, when the terminal device corresponding to the recipient does not have the capability of the instant messaging message, the message may be pushed, through an SMS message service channel, to the terminal device corresponding to the recipient, for example, the mobile phone C 106 in FIG. 1a.
   The communication network between the BeiDou satellite terrestrial information processing center 103 and the server 104 may be various networks that may be deployed, and any type of network that can implement communication between the BeiDou satellite terrestrial information processing center 103 and the server 104 is applicable, for example, a local area network or a wide area network. The server 104 may be a single server, or may be a server cluster.
(5) The mobile phone B 105 may be configured to receive the BeiDou satellite message from the server 104 through the instant message channel. For example, in a scenario in which the mobile phone A 101 sends the BeiDou satellite message by using the MeeTime APP shown in FIG. 1b-1 to FIG. 1b-8, the MeeTime APP is also installed on the mobile phone B 105. In this case, the mobile phone B 105 may receive the BeiDou satellite message by using the MeeTime APP. The mobile phone B 105 may be, for example, a mobile phone of Li Si. FIG. 1c is a diagram of an interface for receiving a BeiDou short packet. A home page interface 190 of the MeeTime APP included in the mobile phone B 105 may include a "BeiDou satellite message" card. When the mobile phone B 105 receives a new BeiDou satellite message, the "BeiDou satellite message" card displayed in the interface 190 may display a reminder for a new message. Then, the mobile phone B 105 may display an interface 1100 in response to a tap operation of the user on the "BeiDou satellite message" card. A preview card of a BeiDou satellite message sent by Zhang San may be displayed in the interface 1100.
(6) The mobile phone C 106 may be configured to receive the BeiDou satellite message from the server 104 through the SMS message service channel. In some embodiments, the mobile phone C 106 may indirectly receive the BeiDou satellite message from the server 104 through an SMS message gateway system. It may be understood that, in a scenario in which the server 104 determines that the BeiDou satellite message needs to be pushed, through the SMS message service channel, to the terminal device corresponding to the recipient, the BeiDou satellite message may be forwarded to the SMS message gateway system, and the SMS message gateway system forwards the BeiDou satellite message through the SMS message service channel based on recipient information.

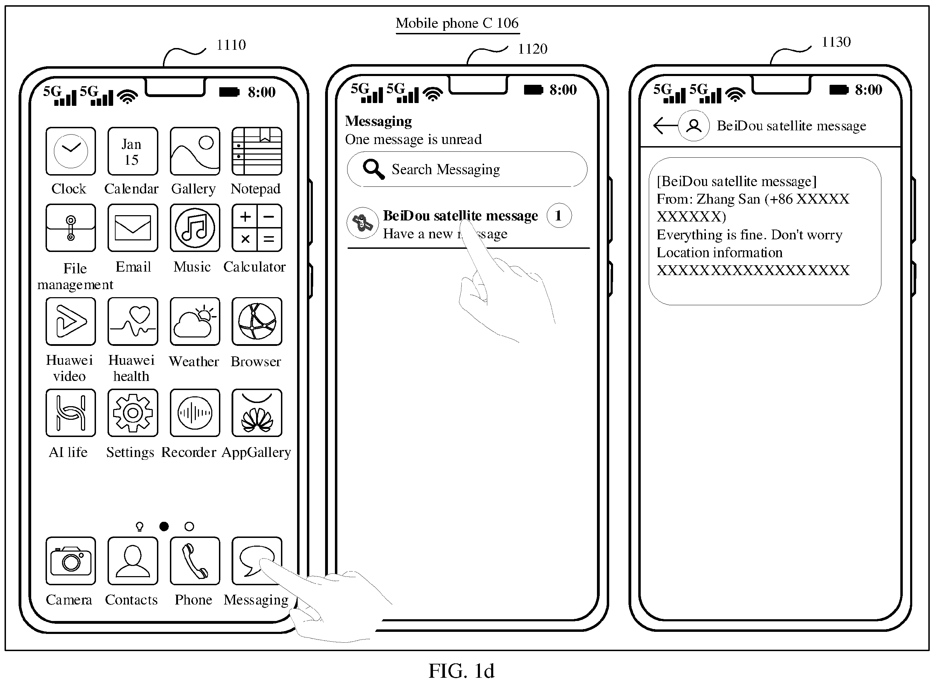

For example, in a scenario in which the mobile phone A 101 sends the BeiDou satellite message by using the MeeTime APP shown in FIG. 1b-1 to FIG. 1b-8, the MeeTime APP is not installed on the mobile phone C 106. In this case, the mobile phone C 106 may receive the BeiDou satellite message by using a messaging APP. The mobile phone C 106 may be, for example, a mobile phone of Wang Wu. FIG. 1d is a diagram of an interface for receiving a BeiDou short packet. An interface 1110 in FIG. 1d shows a home screen of the mobile phone C 106. The interface 1110 includes at least the messaging APP. The mobile phone may display a home page interface 1120 of the messaging APP in response to a tap operation of the user on the messaging APP. The interface 1120 may display information received by the mobile phone C 106, and may include read information and unread information. In an example, the interface 1120 includes only an unread BeiDou satellite message. The mobile phone displays an interface 1130 in response to a tap operation on a "BeiDou satellite message" information box. A preview card of specific message content of the BeiDou satellite message sent by Zhang San may be displayed in the interface 1130.

It can be learned from the description content of FIG. 1a to FIG. 1d that, in consideration of limitations of factors such as use, resources, or costs of the BeiDou satellite, a message can be sent only when a device posture of a terminal device is aligned with the BeiDou satellite. In addition, due to a feature of the BeiDou satellite, the BeiDou satellite cannot actively push a message to the terminal device. Therefore, satellite communication only implements sending, by a transmitter device, a BeiDou short packet in an environment without a network and receiving, by a receiver device, the BeiDou short packet in an environment with a network. Consequently, a usage scenario of the BeiDou short packet is limited to some extent.

In view of this, an embodiment of this application provides a communication method. In the method, based on that a receiver device receives a BeiDou satellite message, the receiver device may further reply to the BeiDou satellite message; and a transmitter device may receive a reply message of the BeiDou satellite message from the receiver device. Therefore, according to the method, more application scenarios can be extended, and better communication assurance can be provided for a user.

Embodiments of this application may be applied to a terminal device having a communication capability, such as a mobile phone, a PC, a tablet computer, a wearable device (for example, a watch or a band), a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and a smart home device (for example, a smart television or a smart speaker). It may be understood that a specific type of the terminal device is not limited in embodiments of this application.

The terminal device to which embodiments of this application may be applied includes, in an example embodiment, but is not limited to a terminal device on which HarmonyOS^{®}, iOS^{®}, Android^{®}, Microsoft^{®}, or another operating system is installed. Alternatively, the portable terminal device may be another portable terminal device, for example, a laptop computer (Laptop) with a touch-sensitive surface (for example, a touch panel).

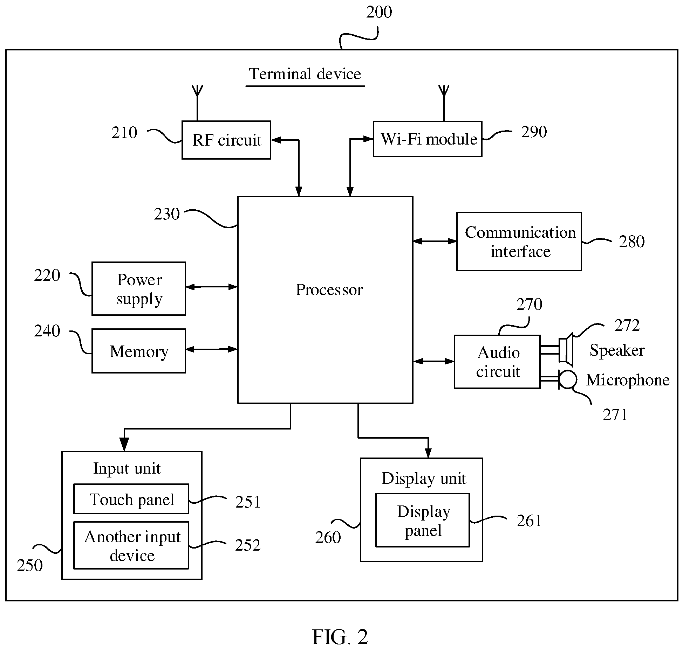

FIG. 2 is a diagram of a possible hardware structure of a terminal device. The terminal device 200 includes components such as a radio frequency (radio frequency, RF) circuit 210, a power supply 220, a processor 230, a memory 240, an input unit 250, a display unit 260, an audio circuit 270, a communication interface 280, and a wireless fidelity (wireless fidelity, Wi-Fi) module 290. A person skilled in the art may understand that a hardware structure of the terminal device 200 shown in FIG. 2 does not constitute a limitation on the terminal device 200. The terminal device 200 provided in this embodiment of this application may include more or fewer components than those shown in the figure, may combine two or more components, or may have different component configurations. The various components shown in FIG. 2 may be implemented in hardware including one or more signal processing circuits and/or application-specific integrated circuits, software, or a combination of hardware and software.

The following specifically describes each component of the terminal device 200 with reference to FIG. 2.

The RF circuit 210 may be configured to receive and send data in a communication or call process. Particularly, after receiving downlink data from a base station, the RF circuit 210 sends the downlink data to the processor 230 for processing, and sends to-be-sent uplink data to the base station. Generally, the RF circuit 210 includes but is not limited to an antenna, at least one amplifier, a transceiver, a coupler, a low noise amplifier (low noise amplifier, LNA), a duplexer, and the like.

In addition, the RF circuit 210 may also communicate with another device by using a wireless communication network. The wireless communication may use any communication standard or protocol, including but not limited to a global system for mobile communications (global system of mobile communication, GSM), a general packet radio service (general packet radio service, GPRS), and code division multiple access (code division multiple access, CDMA), wideband code division multiple access (wideband code division multiple access, WCDMA), long term evolution (long term evolution, LTE), an email, a short messaging service (short messaging service, SMS), and the like.

The terminal device 200 can further implement a communication service and interact with another terminal device. Therefore, the terminal device 200 needs to have a data transmission function, that is, the terminal device 200 needs to internally include a communication module. Although FIG. 2 shows communication modules such as the RF circuit 210, the Wi-Fi module 290, and the communication interface 280, it may be understood that the terminal device 200 includes at least one of the foregoing components or another communication module (for example, a Bluetooth module) configured to implement communication, to perform data transmission.

For example, when the terminal device 200 is a mobile phone, the terminal device 200 may include the RF circuit 210, and may further include the Wi-Fi module 290, or may include a Bluetooth module (not shown in FIG. 2). When the terminal device 200 is a computer, the terminal device 200 may include the communication interface 280, and may further include the Wi-Fi module 290, or may include a Bluetooth module (not shown in FIG. 2). When the terminal device 200 is a tablet computer, the terminal device 200 may include the Wi-Fi module, or may include a Bluetooth module (not shown in FIG. 2).

A Wi-Fi technology is a short-range wireless transmission technology. The terminal device 200 may be connected to an access point (access point, AP) through the Wi-Fi module 290, to implement access to a data network. The Wi-Fi module 290 may be configured to receive and send data in a communication process.

The terminal device 200 may be physically connected to another device through the communication interface 280. Optionally, the communication interface 280 is connected to a communication interface of the another device by using a cable, to implement data transmission between the terminal device 200 and the another device.

The memory 240 may be configured to store a software program and a module. The processor 230 runs the software program and the module stored in the memory 240, to execute various function applications of the terminal device 200 and process data. Optionally, the memory 240 may mainly include a program storage area and a data storage area. The program storage area may store an operating system (mainly including software programs or modules respectively corresponding to a kernel layer, a system layer, an application framework layer, an application layer, and the like).

In addition, the memory 240 may include a high-speed random access memory, and may further include a non-volatile memory, for example, at least one magnetic disk storage device, a flash memory, or another volatile solid-state storage device.

The input unit 250 may be configured to receive editing operations of a plurality of different types of data objects such as digit or character information entered by a user, and generate a key signal input related to user settings and function control of the terminal device 200. Optionally, the input unit 250 may include a touch panel 251 and another input device 252.

The touch panel 251, also referred to as a touchscreen, may collect a touch operation (for example, an operation performed by the user on the touch panel 251 or near the touch panel 251 by using any proper object or accessory such as a finger or a stylus) performed by the user on or near the touch panel, and drive a corresponding connection apparatus based on a preset program. In this embodiment of this application, the touch panel 251 may collect an operation performed by the user on a display panel 261, for example, may be a tap operation on a "reply" control included in a BeiDou satellite message displayed in an interface.

Optionally, the another input device 252 may include but is not limited to one or more of a physical keyboard, a function key (for example, a volume control button or a power on/off button), a tracking ball, a mouse, a joystick, and the like.

The display unit 260 may be configured to display information entered by the user, information provided for the user, and various menus of the terminal device 200. The display unit 260 is a display system of the terminal device 200, and is configured to present an interface to implement man-machine interaction. The display unit 260 may include the display panel 261. Optionally, the display panel 261 may be configured in a form such as a liquid crystal display (liquid crystal display, LCD) or an organic light-emitting diode (organic light-emitting diode, OLED). In this embodiment of this application, when the terminal device 200 is a receiver device of a BeiDou satellite message, the display unit 260 may be configured to display an interface for the user, so that the user can view the received BeiDou satellite message by using the interface, and may further reply to the BeiDou satellite message by using the interface, and the like. Alternatively, when the terminal device 200 is a transmitter device of a BeiDou satellite message, the display unit 260 may be configured to display an interface for the user, so that the user can send the BeiDou satellite message by using the interface, and may further receive a reply message of the receiver device by using the interface.

The processor 230 is a control center of the terminal device 200, connects to the components by using various interfaces and lines, and runs or executes the software program and/or the module stored in the memory 240 and invokes the data stored in the memory 240, to perform various functions of the terminal device 200 and process the data, and implement a plurality of services based on the terminal device 200. In this embodiment of this application, the processor 230 may be configured to implement the communication method provided in embodiments of this application.

The terminal device 200 further includes the power supply 220 (such as a battery) configured to supply power to the components. Optionally, the power supply 220 may be logically connected to the processor 230 by using a power management system, to implement functions such as charge management, discharge management, and power consumption management by using the power management system.

As shown in FIG. 2, the terminal device 200 further includes the audio circuit 270, a microphone 271, and a speaker 272, and may provide an audio interface between the user and the terminal device 200. The audio circuit 270 may be configured to convert audio data into a signal that can be identified by the speaker 272, and transmit the signal to the speaker 272. The speaker 272 converts the signal into a sound signal for output. The microphone 271 is configured to collect an external sound signal (for example, a sound of a person speaking, or another sound), convert the collected external sound signal into a signal that can be identified by the audio circuit 270, and send the signal to the audio circuit 270. The audio circuit 270 may further be configured to convert the signal sent by the microphone 271 into audio data, and then output the audio data to the RF circuit 210 for sending to, for example, another terminal device, or output the audio data to the memory 240 for subsequent processing.

Although not shown, the terminal device 200 may further include a camera, at least one sensor, and the like. Details are not described herein. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in embodiments of this application is most basic system software running on the terminal device 200. A layered architecture, an event-driven architecture, a microkernel architecture, a microservice architecture, or a cloud architecture may be used for a software system of the terminal device 200. In this embodiment of this application, an operating system using a layered architecture is used as an example to describe a software system architecture of the terminal device 200.

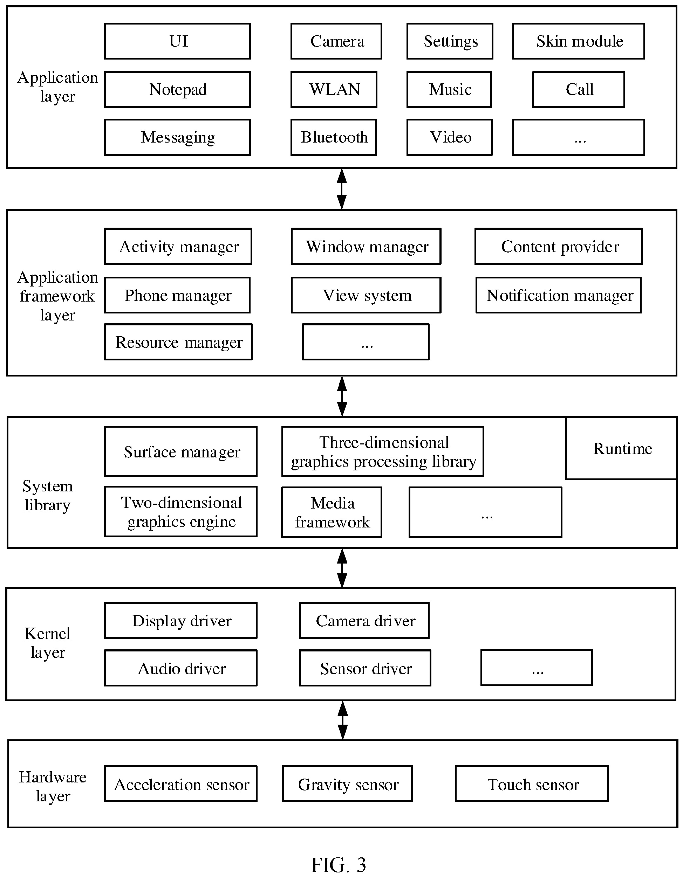

FIG. 3 is a block diagram of a software system architecture of a terminal device according to an embodiment of this application. As shown in FIG. 3, the software system architecture of the terminal device may be a layered architecture. For example, software may be divided into several layers, and each layer has a clear role and task. The layers communicate with each other through software interfaces. In some embodiments, an operating system is divided into five layers: an application layer, an application framework layer (framework, FWK), a runtime and system library, a kernel layer, and a hardware layer from top to bottom.

The application layer may include a series of application packages. As shown in FIG. 3, the application layer may include Camera, Settings, a skin module, a user interface (user interface, UI), a third-party application, and the like. The third-party application may include a wireless local area network (wireless local area network, WLAN), Music, Call, Bluetooth, Video, Notepad, Messaging, and the like. In this embodiment of this application, attention may be paid to an instant messaging APP (for example, a MeeTime APP) or a messaging APP that may be provided by the application layer. A BeiDou satellite message may be sent and received in the instant messaging APP or the messaging APP. When the terminal device is not served by a network, a message may be sent in a form of a BeiDou short packet.

In a possible implementation, the application may be developed by using a Java language, and is completed by invoking an application programming interface (application programming interface, API) provided by the application framework layer. A developer may interact with a bottom layer (for example, the hardware layer or the kernel layer) of an operating system by using the application framework layer, to develop an application of the developer. The application framework layer mainly includes a series of services and management systems of the operating system.

The application framework layer provides an application programming interface and a programming framework for an application of the application layer. The application framework layer includes some predefined functions. As shown in FIG. 3, the application framework layer may include an activity manager, a window manager, a content provider, a view system, a phone manager, a resource manager, a notification manager, and the like.

The activity manager is configured to manage a life cycle of each application, provide a common navigation rollback function, and provide an interaction interface for windows of all programs.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the terminal device, for example, management of a call status (including answering, hanging up, or the like).

The resource manager provides various resources for an application such as a localized character string, an icon, a picture, a layout file, and a video file.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, the terminal device vibrates, or an indicator light blinks.

A runtime includes a core library and a virtual machine. The runtime is responsible for scheduling and managing an operating system.

The kernel library includes two parts: One part is a performance function that needs to be invoked by the Java language, and the other part is a kernel library of the operating system. The application layer and the application framework layer run on the virtual machine. The virtual machine executes Java files of the application layer and the application framework layer as binary files. The virtual machine is configured to implement functions such as object life cycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL).

The surface manager is used to manage a display subsystem and provide fusion of two-dimensional and 3D layers for a plurality of applications.

The media framework supports playback and recording of audios and videos in a plurality of commonly used formats, static image files, and the like. The media framework may support a plurality of audio and video coding formats, for example, MPEG4, H.264, MP3, AAC, AMR, JPG, and PNG.

The three-dimensional graphics processing library is used to implement three-dimensional graphics drawing, image rendering, composition, layer processing, and the like.

The two-dimensional graphics engine is a drawing engine for two-dimensional drawing.

In some embodiments, the three-dimensional graphics processing library may be used to draw a three-dimensional motion track image, and the two-dimensional graphics engine may be used to draw a two-dimensional motion track image.

The kernel layer is a layer between hardware and software. The kernel layer includes at least a display driver, a camera driver, an audio driver, and a sensor driver.

The hardware layer may include various sensors, such as an acceleration sensor, a gravity sensor, and a touch sensor.

Generally, the terminal device 200 may run a plurality of applications at the same time. In a simple manner, one application may correspond to one process, and in a complex manner, one application may correspond to a plurality of processes. Each process has a process number (process ID).

It should be understood that "at least one of the following items (pieces)" or a similar expression thereof in embodiments of this application indicates any combination of the items, and includes any combination of singular items (pieces) or plural items (pieces). For example, at least one of a, b, or c may represent: a, b, c, a and b, a and c, b and c, or a, b and c, where a, b, and c may be a singular or plural number. "A plurality of' means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

In addition, it should be understood that in descriptions of this application, terms such as "first" and "second" are merely used for distinguishing and description, but should not be understood as indicating or implying relative importance, or should not be understood as indicating or implying a sequence.

It should be understood that the hardware structure of the terminal device may be shown in FIG. 2, and the software system architecture may be shown in FIG. 3. A software program and/or a module corresponding to the software system architecture of the terminal device may be stored in the memory 240. The processor 230 may run the software program and the application stored in the memory 240, to perform a procedure of the communication method provided in embodiments of this application.

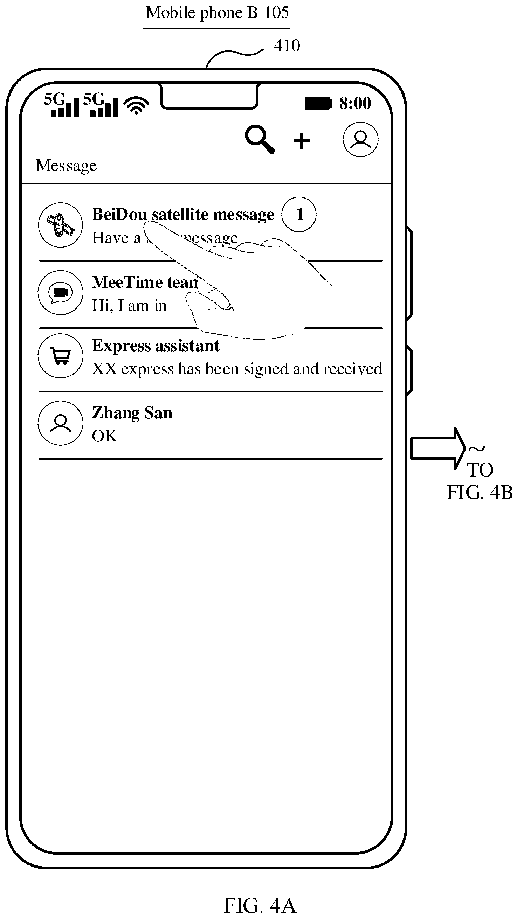

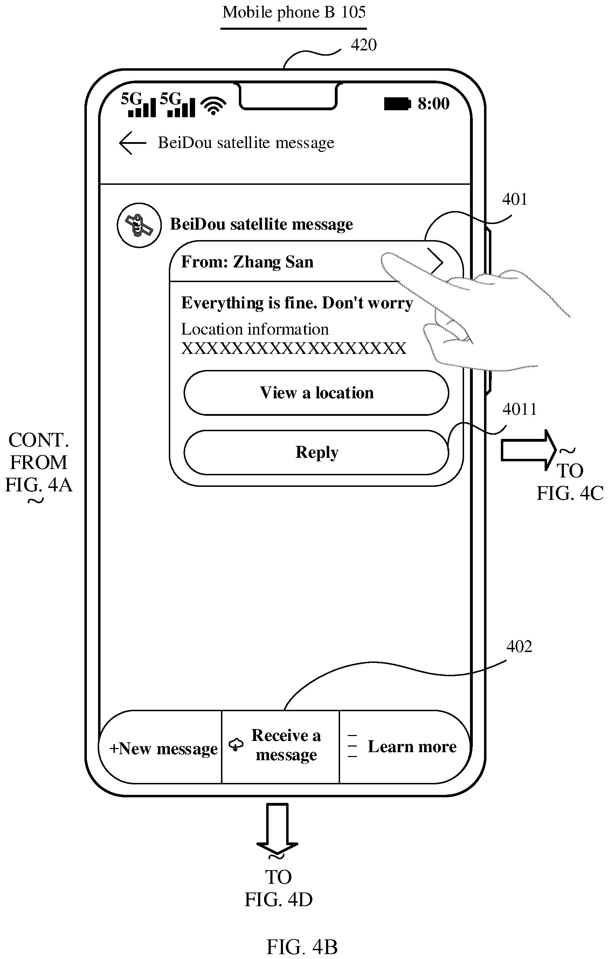

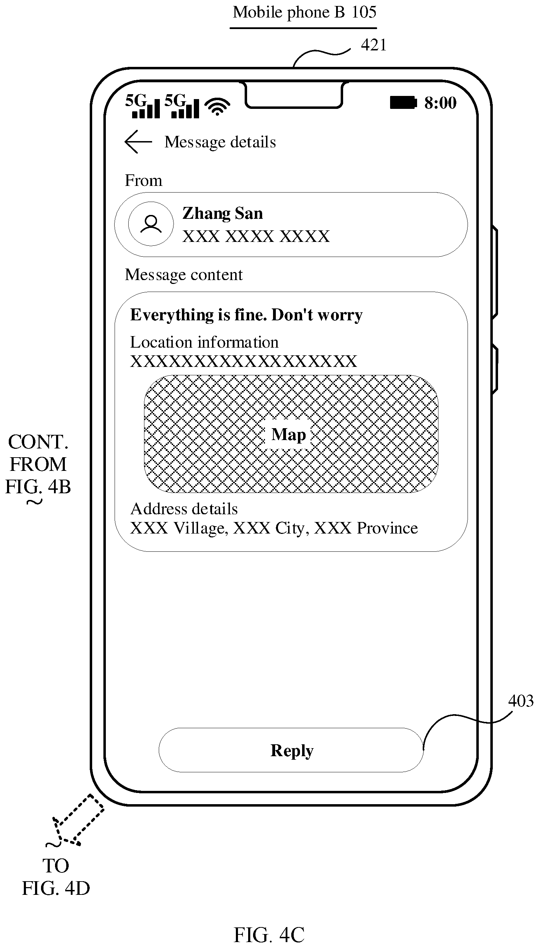

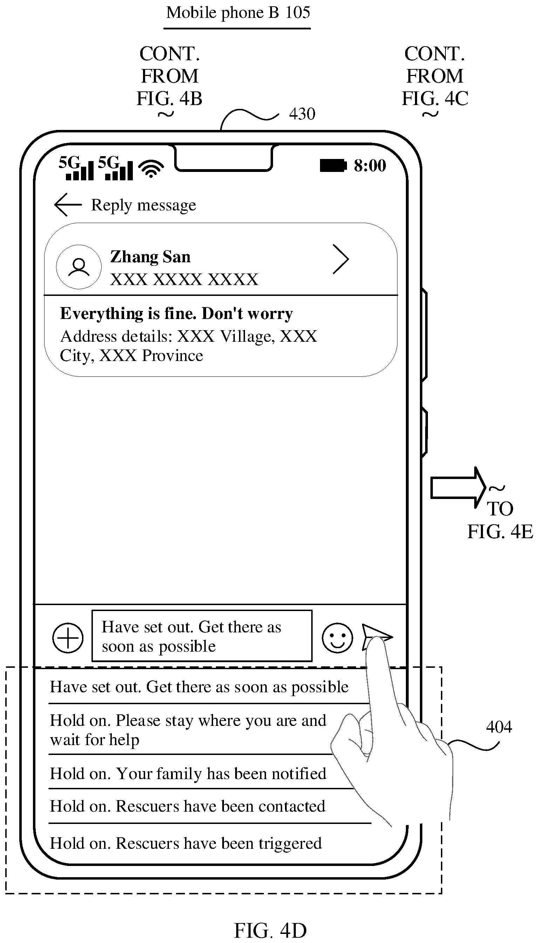

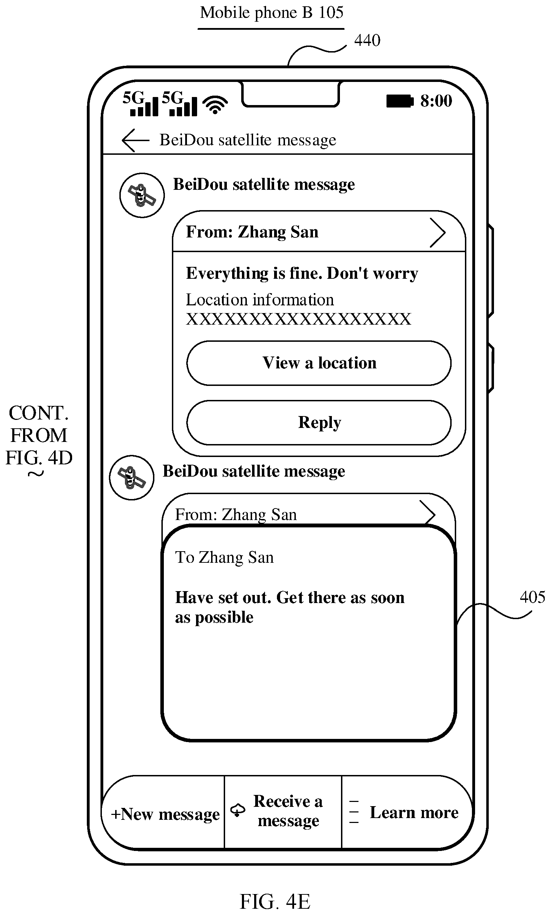

To facilitate understanding of the communication method provided in this application, the following describes, with reference to content shown in FIG. 4A to FIG. 4E to FIG. 11, an implementation process of the method provided in this application.

In the method provided in embodiments of this application, in a satellite communication scenario in which communication is performed in a form of a BeiDou short packet, in a scenario in which a transmitter device sends a BeiDou satellite message, a receiver device may further reply to the received BeiDou satellite message, and the transmitter device may further receive a replied BeiDou satellite message. In this way, an application scenario of BeiDou satellite communication can be extended, and better communication assurance can be provided for a user.

The following describes technical terms that may be used in the method provided in this application.
(1) Letter query mechanism. Based on a mobility feature of a BeiDou satellite, a BeiDou short packet communication system is a non-resident communication system, and a BeiDou satellite accessed by a terminal device is usually switched with movement of the BeiDou satellite. Therefore, downlink transmission of a BeiDou network is usually implemented by using the letter query mechanism. In this scenario, when receiving a message sent to a terminal device in a state without a network connection, a server may usually first store the message, and wait for a letter query request of the terminal device. It may be understood that the terminal device actively sends a letter query request packet to the accessed BeiDou satellite, where the letter query request packet is used by the terminal device to request to download a to-be-received satellite message. After receiving the letter query request packet, the BeiDou satellite may query, through the BeiDou satellite terrestrial information processing center 103 and the server 104 shown in FIG. 1a, whether a letter of the terminal device is stored. When the letter exists, the server 104 sends the letter to the BeiDou satellite through the BeiDou satellite terrestrial information processing center 103. Finally, the BeiDou satellite delivers the letter to the terminal device.

Based on the content described in FIG. 1a to FIG. 1d in the foregoing embodiments, when a transmitter device sends a BeiDou satellite message based on an instant messaging scenario or a messaging APP, a receiver device may receive the BeiDou satellite message in at least one manner of the instant messaging APP or the messaging APP. Based on this, for ease of understanding, the following first describes several possible application scenarios that may be related to the method provided in embodiments of this application.

### Scenario A1: Reply based on the instant messaging APP

With reference to FIG. 1c in which the mobile phone B 105 receives the BeiDou satellite message by using the MeeTime APP, FIG. 4A to FIG. 4E are a diagram of a reply interface of a BeiDou satellite message according to an embodiment of this application. A home page interface 410 of the MeeTime APP included in the mobile phone B 105 may include a "BeiDou satellite message" card. A reminder for a new message may be displayed in the "BeiDou satellite message" card, for example, may be displayed in a form of a number or a red dot. A reminder manner is not limited in this application. The mobile phone B 105 may display an interface 420 in response to a touch control operation on the "BeiDou satellite message" card. The interface 420 may display a preview card 401 of a BeiDou satellite message from Zhang San. The preview card 401 may include sender information, message content, location information carried in the message, and the like that are obtained based on the BeiDou satellite message sent by Zhang San, and may also include a "reply" control 4011. The "reply" control 4011 may be used to implement a reply of a recipient to the BeiDou satellite message from Zhang San by using an instant messaging technology on the mobile phone B 105. It should be noted that although the interface 420 displays the received BeiDou satellite message in a form of a message card, a display form is not limited in this embodiment of this application, for example, may alternatively be implemented in a form of text content. In addition, although the interface 420 is used to reply to the BeiDou satellite message by using the "reply" control included in the message card, a display form of the "reply" control is not limited in this embodiment of this application, for example, may alternatively be implemented in a form of a separate control in an interface 421 described in the subsequent embodiments, or reference display performed when a touch and hold operation and the like on the card 401 is detected.

For another example, in the interface 420, the mobile phone B 105 may further receive a touch control operation on the preview card 401, and display the interface 421. The interface 421 displays detailed information of the BeiDou satellite message. The interface 421 may also include a "reply" control 403 having a function similar to that of the "reply" control 4011 included in the interface 420. It may be understood that during actual implementation, the mobile phone B 105 may detect and respond to a touch control operation performed by the user on the "reply" control 4011 in the interface 420, or may detect and respond to a touch control operation performed by the user on the "reply" control 403 in the interface 421, and display an interface 430. The interface 430 is used by the recipient to reply to the BeiDou satellite message from Zhang San.

In the interface 430, the mobile phone B 105 may be configured to detect and respond to an editing operation of the user, to obtain reply content entered by the user. In addition, in the interface 430, the mobile phone B 105 may further provide a display area 404 used to display a plurality of common replies, so that the user can conveniently select a common reply and edit reply content. In the interface 430, the mobile phone B 105 may further display an interface 440 in response to a touch control operation performed by the user on a sending control. In some other embodiments, the mobile phone B 105 may further detect and respond to an operation on any common reply in the display area 404, and directly trigger sending of the message. In this way, an operation of the user can be saved.

The interface 440 may include a preview card 405 of a reply message of the BeiDou satellite message of Zhang San. In some possible embodiments, based on an association relationship between a BeiDou satellite message and a reply message, the preview card 405 may implement associated display of the reply message based on the received BeiDou satellite message, for example, may display the reply message in an overlay display manner shown in the interface 440. In this way, the user can intuitively determine the association relationship between the messages from the display interface.

In addition, a message window of the BeiDou satellite message shown in the interface 420 or the interface 440 may further include a "message receiving" control 402. In this way, in a state without a network connection or a state with a network connection, the mobile phone B 105 may further query whether there is a to-be-received BeiDou satellite message in response to a touch control operation performed by the user on the "message receiving" control 402. For a specific implementation process, refer to content of receiving the reply message by the mobile phone A 101 in subsequent embodiments. Details are not described herein.

### Scenario A2: Reply based on the messaging APP

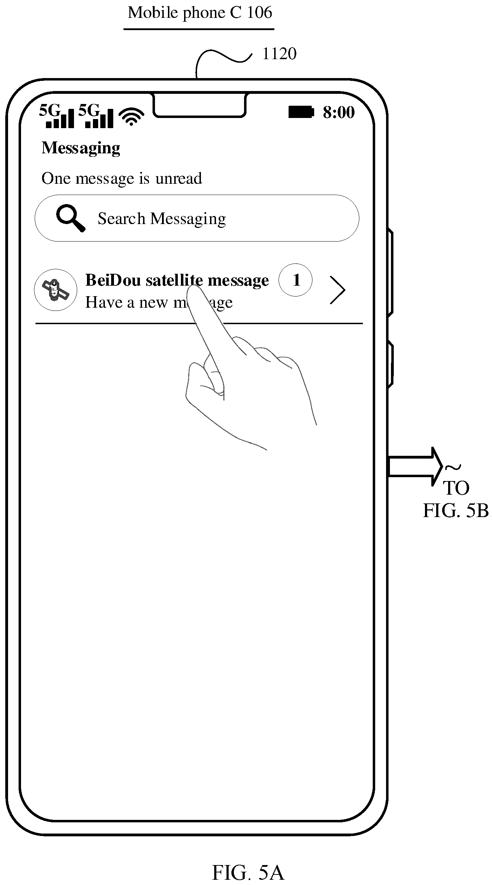

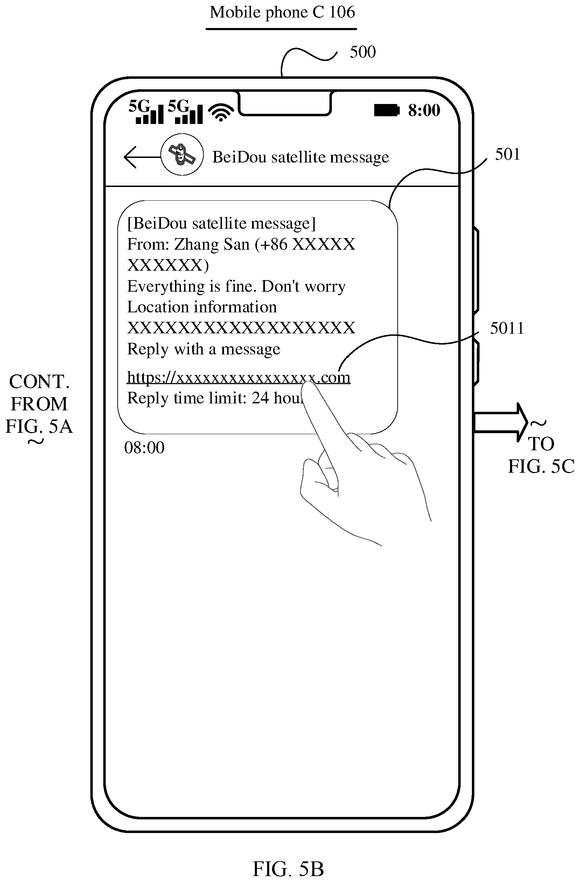

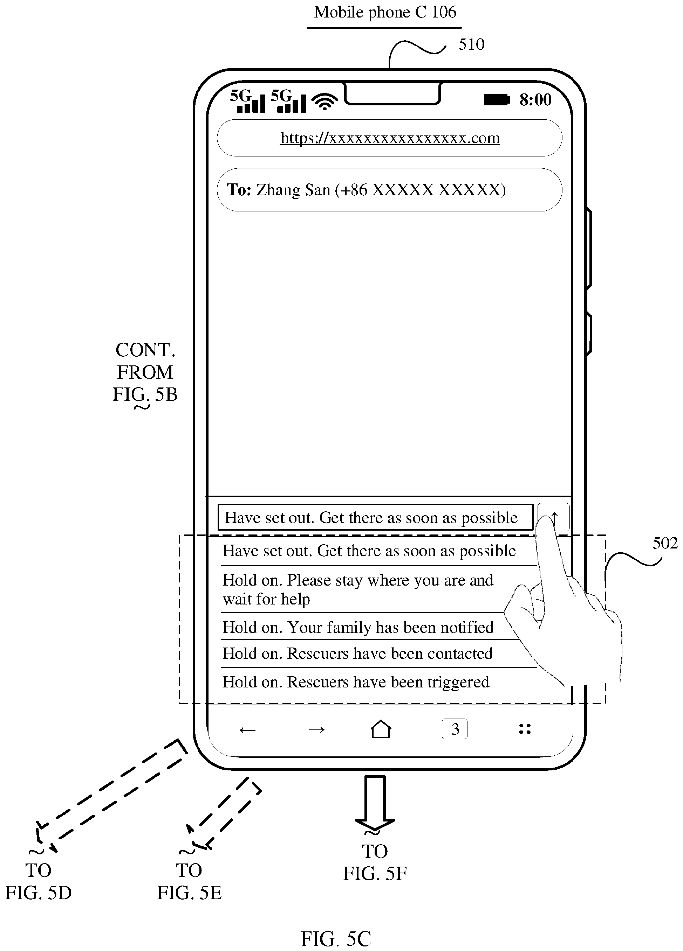

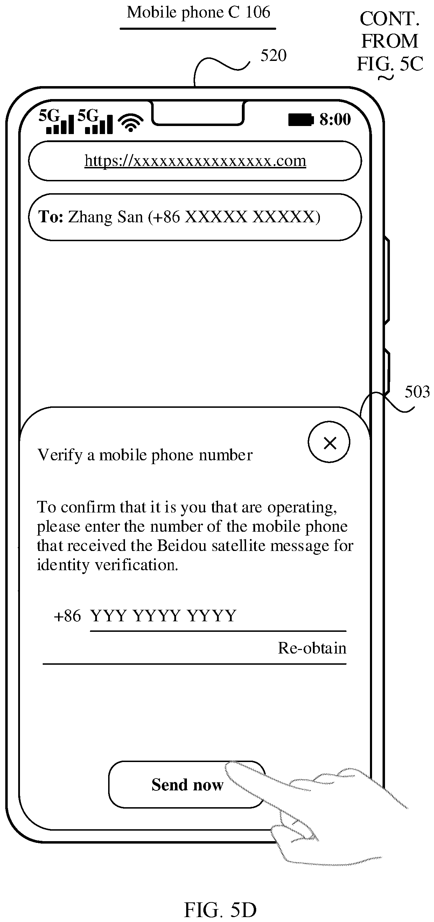

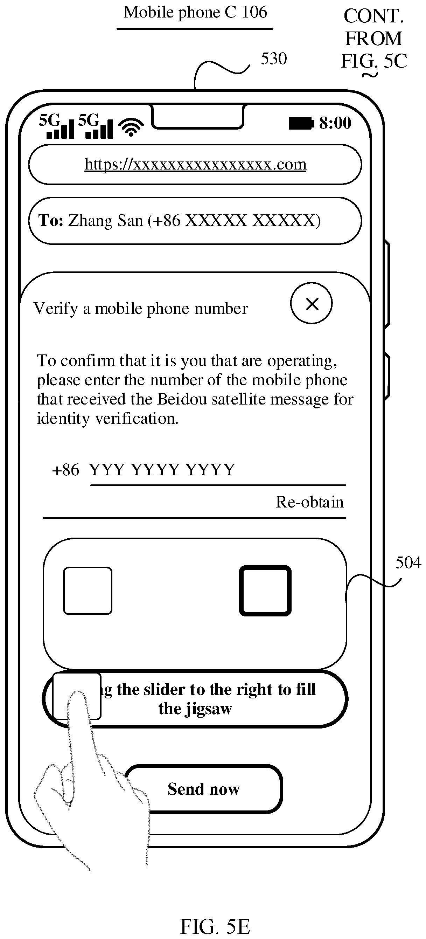

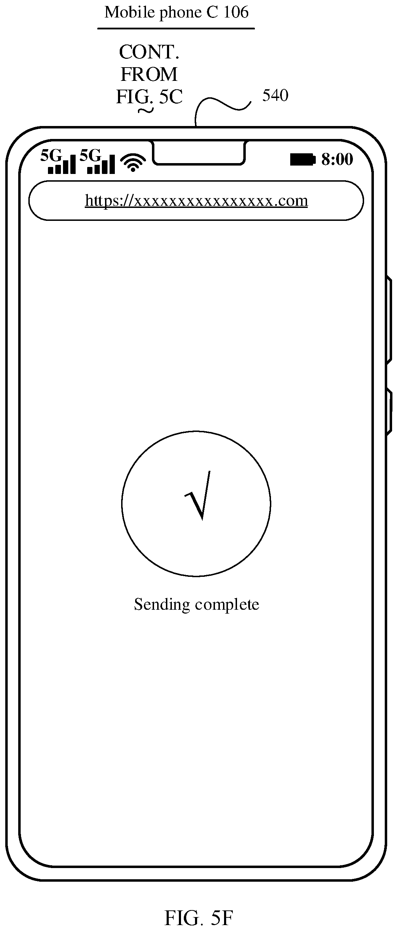

With reference to FIG. 1d in which the mobile phone C 106 receives the BeiDou satellite message by using the messaging APP, FIG. 5A to FIG. 5F are a diagram of another reply interface of a BeiDou satellite message according to an embodiment of this application. A home page interface 1120 of the messaging APP included in the mobile phone C 106 may include a "BeiDou satellite message" information box. A reminder for a new message may be displayed in the "BeiDou satellite message" information box, for example, may be displayed in a form of a number or a red dot. A reminder manner is not limited in this application. The mobile phone C 106 may display an interface 500 in response to a touch control operation on the "BeiDou satellite message" information box, where the interface 500 is a message window related to a BeiDou satellite message. The interface 500 may display an information preview card 501 of a BeiDou satellite message from Zhang San. The information preview card 501 may include sender information, message content, and location information carried in the message that are obtained based on the BeiDou satellite message sent by Zhang San, and may also include a link 5011 used to jump to a reply interface. The mobile phone may display a web page interface 510 in response to a touch control operation performed by the user on the link 5011. The web page interface 510 is similar to the interface 430 in the scenario A1, and may be used to reply to the BeiDou satellite message from Zhang San. For example, the web page interface 510 may be implemented by using, but not limited to, an H5 interface. It should be noted that, although the interface 500 displays the received BeiDou satellite message in a form of a message card, a display form is not limited in this embodiment of this application, for example, may alternatively be implemented in a form of text content. In addition, although the interface 500 is used to reply to the BeiDou satellite message by using a reply link included in the message card, a display form of a control used to reply to the BeiDou satellite message is not limited in this embodiment of this application. For example, the card 501 may alternatively include a "reply" control. Alternatively, after an operation such as a touch and hold operation is performed on the card 501, reference display is performed; or the like. In some embodiments, the reply link included in the card 501 in the interface 500 may be provided by a server, and is sent to the mobile phone C 106 together with the BeiDou satellite message. After receiving the BeiDou satellite message and the reply link, the mobile phone C 106 displays the information preview card 501. In some embodiments, the web page interface 510 may be displayed in a browser APP.

In the web page interface 510, the mobile phone C 106 may be configured to detect and respond to an editing operation of the user, to obtain reply content entered by the user. In addition, in the web page interface 510, the mobile phone C 106 may also provide, for the user, a display area 502 used to display a plurality of common replies, so that the user can conveniently select a common reply and edit reply content. Then, in the web page interface 510, the mobile phone C 106 may further display an interface 540, an interface 520, or an interface 530 in response to a touch control operation performed by the user on a sending control. In some other embodiments, the mobile phone C 106 may further detect and respond to an operation on any common reply in the display area 502, and directly trigger sending of the message or trigger verification displayed in the interface 520, the interface 530, or the like. In this way, an operation of the user can be saved.

In some embodiments, the interface 520 or the interface 530 may be used to provide a verification entry for the user based on the web page interface 510. By using the verification entry, identity verification may be performed by using a number of a mobile phone that receives the BeiDou satellite message, so that the number of the mobile phone can be used to reply to the BeiDou satellite message, and security assurance can be provided. Compared with the interface 520, the interface 530 may further perform jigsaw verification, to further provide security assurance. In the interface 520 or the interface 530, the mobile phone C 106 may display the interface 540 in response to a touch control operation on an "immediately send" control. It can be learned from the interface 540 that the mobile phone C 106 has sent a message used to reply to the BeiDou satellite message from Zhang San.

In some other implementations, in the interface 500, the mobile phone C 106 may also provide an enter box for replying, the display area 502 for displaying a plurality of common replies or a virtual keyboard area or a handwriting area, the "sending" control, and the like shown in the interface 510; or the mobile phone C 106 detects and responds to an operation performed by the user on the information preview card 501, and displays one or more controls including the reply control around the information preview card 501. In this way, on the mobile phone C 106, in addition to replying to the BeiDou satellite message from Zhang San in the web page interface 510, the BeiDou satellite message may also be directly replied to by using the messaging APP. This is not limited in this application.

### Scenario A3: Reply in an environment without a network

The scenario A1 and the scenario A2 may be understood as a reply of the receiver device in an environment with a network connection, and there may further be a scenario in which the receiver device in an environment without a network connection needs to reply to the BeiDou satellite message from Zhang San.

In some embodiments, in this scenario, the receiver device may first receive, in the environment with a network connection, the BeiDou satellite message from Zhang San. Then, after the receiver device changes from the environment with a network connection to the environment without a network connection, the receiver device may also reply to the message in a form of a BeiDou short packet.

In some other embodiments, the receiver device may alternatively actively request, in the environment without a network based on the letter query mechanism, to query whether there is a to-be-received BeiDou satellite message. It may be understood that, in this scenario, the receiver device may reply to the BeiDou satellite message from Zhang San in the form of the BeiDou short packet.

In this scenario, the receiver device may make a reply by using the instant messaging APP described in the foregoing scenario A1, or may make a reply by using the messaging APP described in the foregoing scenario A2. During specific implementation, determining may be performed based on an application that has a BeiDou satellite message sending capability on the receiver device. In addition, for a device interaction interface related to the reply in the environment without a network, refer to the interface shown in FIG. 4A to FIG. 4E or FIG. 5A to FIG. 5F. Details are not described herein again.

With reference to FIG. 1a in which the mobile phone A 101 serving as the transmitter device sends the BeiDou satellite message, after the receiver device replies to the BeiDou satellite message from the mobile phone A 101 based on any one of the scenario A1 to the scenario A3, the mobile phone A 101 may further receive a reply message. Because the mobile phone A 101 may continue to receive the reply message in the state without a network connection, or may change to receive the reply message in the state with a network connection, the following separately describes two scenarios. It should be noted that, although the following scenario B1 and scenario B2 use a scenario in which the mobile phone A 101 receives the reply message as an example, it may be understood that the mobile phone A 101 may alternatively receive, by using an implementation process described below, a message actively sent by another terminal device.

### Scenario B1: Receive the reply message in the state without a network connection

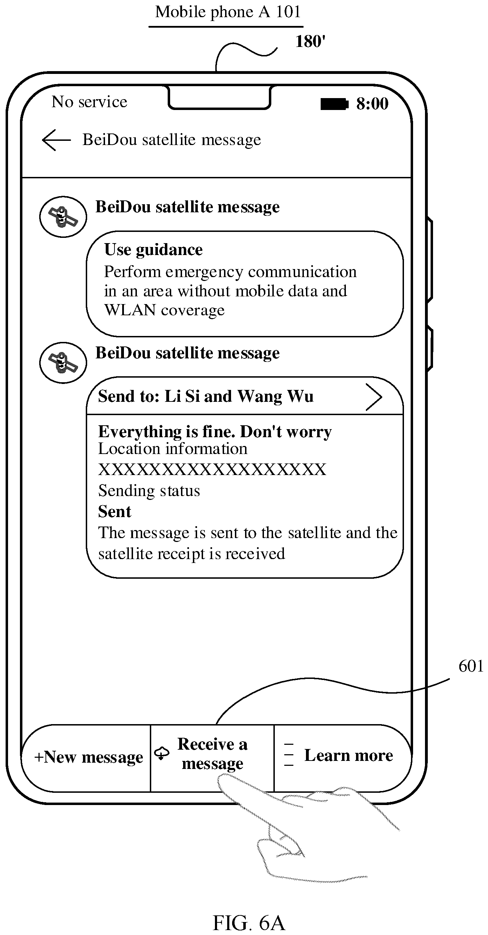

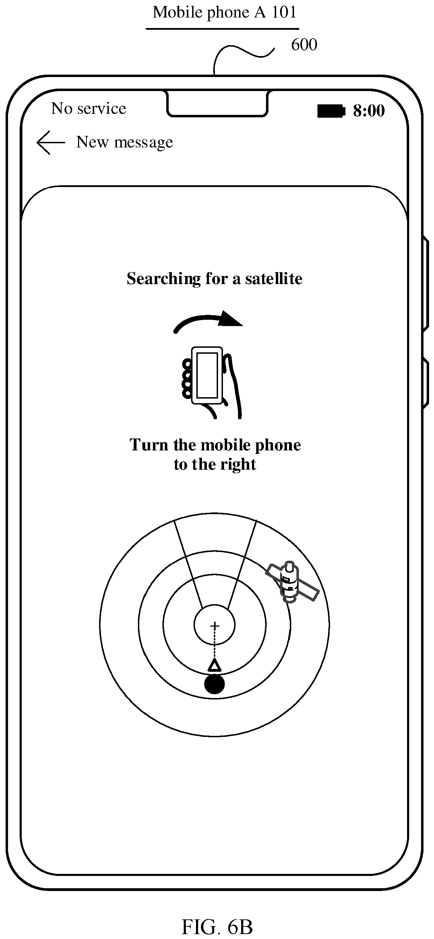

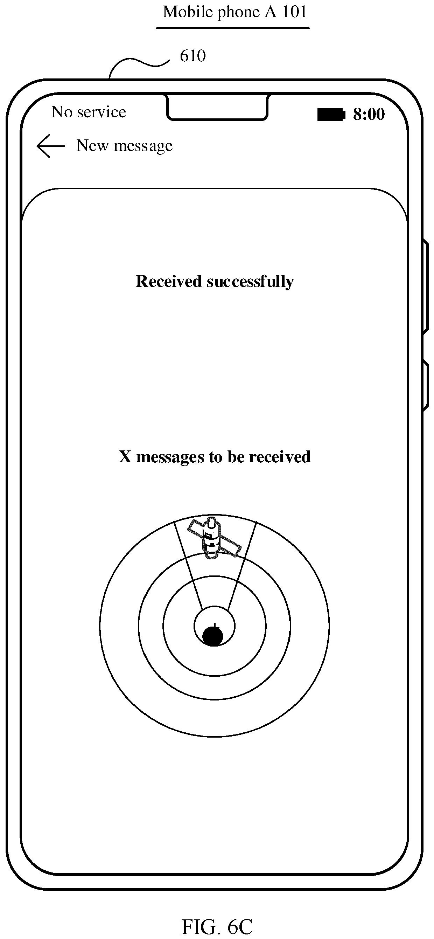

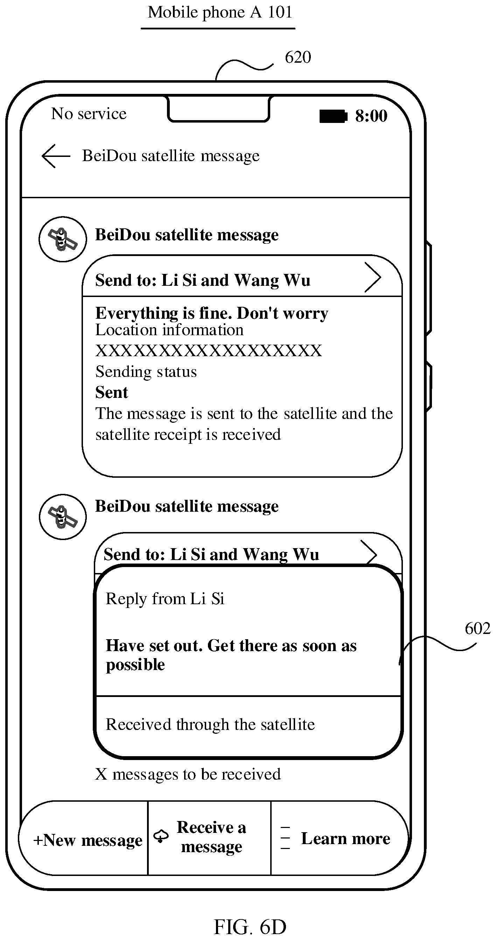

FIG. 6A to FIG. 6D are a diagram of an interface for receiving a reply message according to an embodiment of this application. In this embodiment of this application, after sending a BeiDou satellite message, the mobile phone A 101 in FIG. 1a may display an interface 180'. A difference from the interface 180 shown in FIG. 1b-1 to FIG. 1b-8 lies in that the interface 180' may further include a "message receiving" control 601, and the "message receiving" control 601 may be used by the mobile phone A 101 to actively request, from an accessed BeiDou satellite by using the letter query mechanism, to query whether there is a to-be-received reply message. In some other embodiments, a window interface of the BeiDou satellite message of the mobile phone A 101 may keep displaying the "message receiving" control. It may be understood that a message found by the mobile phone A 101 by using the letter query mechanism may include a reply message, or may include a message sent by another terminal device. In this embodiment of this application, the reply message is used as an example, and this is not limited to the reply message.

In some embodiments, the mobile phone A 101 may display an interface 600 in response to a touch control operation performed by the user on the "message receiving" control 601. The interface 600 may include a prompt indicating to adjust a device posture, for example, turning the mobile phone to the right shown in the interface 600; and may further include a scanning image of the BeiDou satellite, a graph indicating the device posture, a reference graph indicating that the device is aligned with the satellite, and the like. For example, a black ball shown in the interface 600 may indicate a mobile phone posture, a sector area may indicate a target transmission direction of the BeiDou satellite message of the mobile phone, and a center circle of a circular ring may indicate to adjust a pitch angle of the mobile phone. After detecting that the device posture is aligned with the BeiDou satellite, the mobile phone A 101 may display an interface 610. For example, in the interface 610, the scanning image of the BeiDou satellite is in the sector area, and the black ball is in a center circle area of the circular ring. Therefore, the interface 610 may indicate that the mobile phone posture is aligned with the BeiDou satellite. The interface 610 may indicate that the reply message is successfully received, and may further indicate remaining X to-be-received messages, to prompt the user to continue to receive another to-be-received message. In some embodiments, after preset duration, the mobile phone A 101 may automatically change to display an interface 620. The interface 620 may include a preview card 602 used to display the reply message received by the mobile phone A 101. For example, the reply message displayed in the preview card 602 may be a reply message from Li Si. In some possible embodiments, based on an association relationship between the received reply message and the sent BeiDou satellite message, the preview card 602 may implement associated display of the received reply message based on the sent BeiDou satellite message. For example, the preview card 602 may display the received reply message in an overlay display manner shown in the interface 620. In this way, the user can intuitively determine the association relationship between the messages from the display interface.

In some embodiments, the mobile phone A 101 may obtain an ephemeris, determine a satellite and a motion track of the satellite based on the ephemeris, and determine a device posture requirement based on the ephemeris, for example, may display the satellite image in the interface 600 based on the ephemeris. In addition, the mobile phone A 101 may detect the mobile phone posture based on a sensor. It may be understood that the mobile phone A 101 displays the interface 600 based on the ephemeris, the mobile phone posture, and the posture requirement of the mobile phone for aligning with the satellite. When the mobile phone posture is aligned with a satellite orientation range, the image shown in the interface 610 may be displayed. In this way, the mobile phone A 101 indicates the user to adjust the device posture, so that a direction range in which the terminal device sends the request packet can be aligned with a receiving direction range of the satellite. In some other embodiments, after detecting that the device posture meets the requirement, the mobile phone A 101 may further search for the satellite by using at least one of a frequency band, a power, and other information, so that a communication link between the mobile phone A 101 and the satellite can be established after the satellite is found, and the mobile phone A 101 can receive, based on the communication link, a downlink packet delivered by the satellite, and therefore can receive a reply message.

It should be noted that, in FIG. 6A to FIG. 6D, an instant messaging APP is used as an example for description. During actual implementation, the "message receiving" control shown in the interface 180' may alternatively be provided in an interaction window of the BeiDou satellite message included in an entry such as the messaging APP, so that the mobile phone A 101 actively requests, by using the letter query mechanism from the accessed BeiDou satellite, to query whether there is the to-be-received reply message.

### Scenario B2: Receive the reply message in the state with a network connection

After the mobile phone A 101 changes to be in the state with a network connection, based on that the mobile phone A 101 may establish a persistent connection to the terrestrial communication network, in this scenario, the mobile phone A 101 may obtain the reply message from the server 104 based on a persistent connection channel. In this case, for a display interface of the mobile phone A 101, refer to the interface 420 in FIG. 4A to FIG. 4E or refer to the interface 500 in FIG. 5A to FIG. 5F. Details are not described herein again.

It should be noted that the scenario A1 to the scenario B2 are merely several possible scenarios described in embodiments of this application. For example, the scenarios may alternatively be combined. A specific scenario is not limited in this application. For example, although in the foregoing scenarios, an example in which the recipient is an individual is used, during actual implementation, the recipient may alternatively be a third-party platform. In addition, the touch control operation in the foregoing scenarios may be implemented in, but not limited to, the following manners: a tap operation, a double-tap operation, a touch and hold operation, a voice instruction, or the like. During specific implementation, the touch control operation may be implemented based on a configuration form of the terminal device. In addition, the state with a network connection in the foregoing scenarios may include a cellular network, a Wi-Fi network, and the like. It may be understood that, in the state without a network connection, the terminal device may perform communication by using a BeiDou satellite network.

Based on content of the foregoing descriptions of the interface processing effect that can be achieved by using the method provided in embodiments of this application, the following describes an implementation process of the communication method provided in this application, to describe how to use the method provided in this application to achieve the interface processing effect shown in FIG. 4A to FIG. 4E to FIG. 6A to FIG. 6D described above, and how to use the method provided in this application to achieve the effect shown in the scenario A1 to the scenario B2 described above. In this way, the BeiDou satellite message can be replied to and the reply message can be received, which can meet more satellite communication application scenarios and provide better communication assurance for the user.

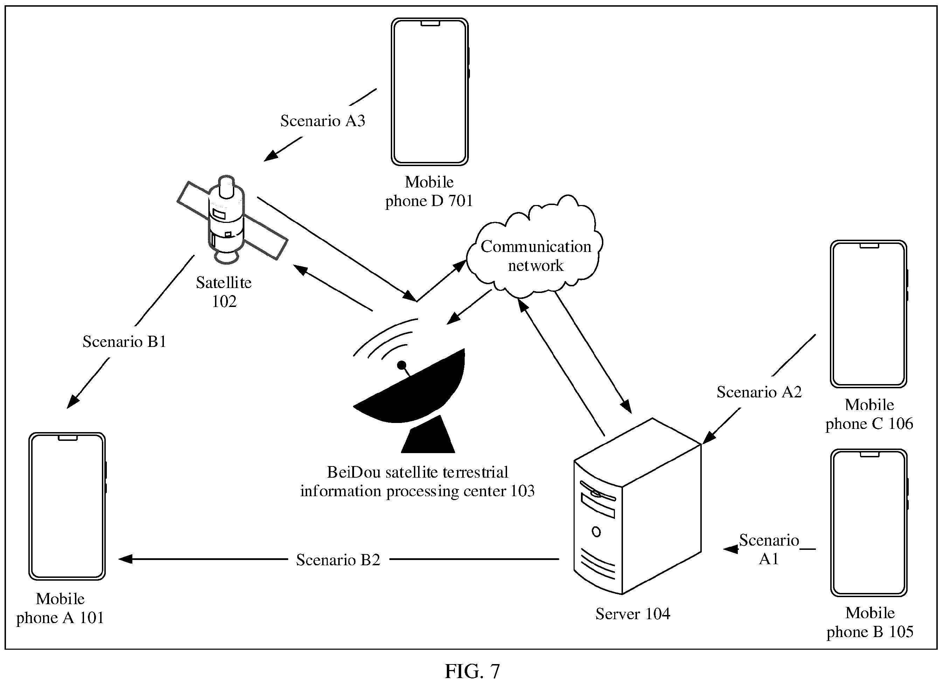

FIG. 7 is a diagram of a scenario of a communication method according to an embodiment of this application. With reference to the application scenario shown in FIG. 1a, the scenario in FIG. 7 may further include a mobile phone D 701. The mobile phone D 701 may be configured to implement the scenario A3 described in the foregoing embodiment, to reply to a received BeiDou satellite message in an environment without a network. The following describes the method provided in this embodiment of this application with reference to the structural diagram shown in FIG. 7 and the flowchart.

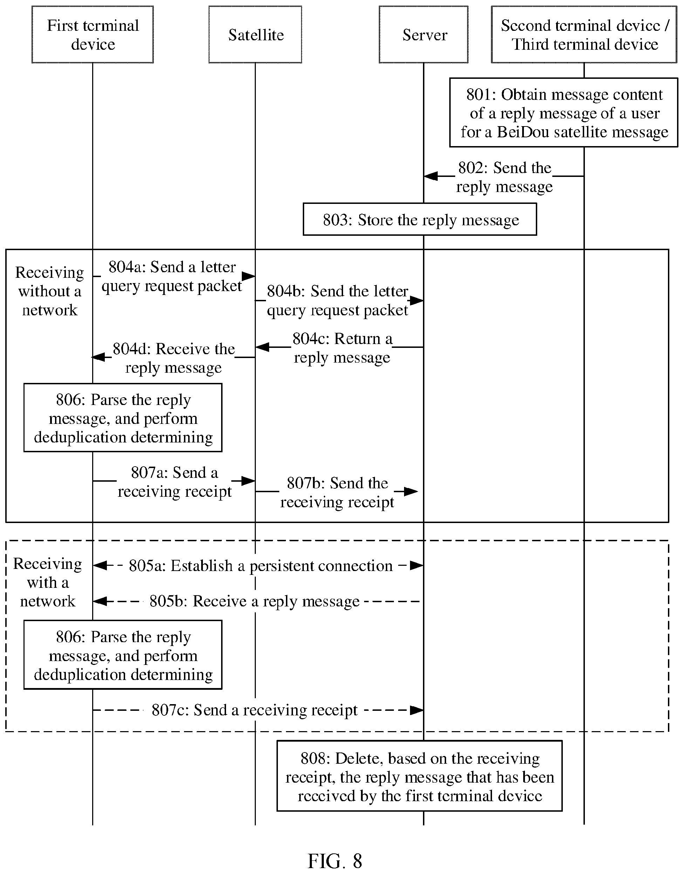

Based on content described in the foregoing scenario A1, scenario A2, scenario B1, and scenario B2, FIG. 8 is a schematic flowchart of a communication method according to an embodiment of this application. A procedure of the method may include the following steps.

Step 801: A second terminal device or a third terminal device obtains message content of a reply message of a user for a BeiDou satellite message. The second terminal device may be, for example, the mobile phone B 105 shown in FIG. 7. The mobile phone B 105 may reply to the BeiDou satellite message by using the instant messaging technology described in the scenario A1. For example, the mobile phone B 105 may obtain, based on the interface procedure described in FIG. 4A to FIG. 4E, the message content of the reply message of the user for the BeiDou satellite. For a specific obtaining process, refer to the content described in the scenario A1. Details are not described herein again. In addition, the third terminal device may be, for example, the mobile phone C 106 shown in FIG. 7. The mobile phone C 106 may reply to the BeiDou satellite message based on the messaging APP described in the scenario A2. For example, the mobile phone C 106 may obtain, based on the interface procedure described in FIG. 5 A to FIG. 5F, the message content of the reply message of the user for the BeiDou satellite. For a specific obtaining process, refer to the content described in the scenario A2. Details are not described herein again.

In some other embodiments, the second terminal device or the third terminal device may also obtain message content of a message actively sent by the user to a first terminal device. For an implementation process, refer to an implementation process of obtaining message content of a reply message. Details are not described herein again.

Step 802: The second terminal device or the third terminal device sends the reply message to a server. For example, the mobile phone B 105 may send the reply message to the server by using a communication network. In this case, the server may be a server corresponding to an instant messaging service, for example, a MeeTime server corresponding to a MeeTime APP. Similarly, the mobile phone C 106 may also send the reply message to the server by using the communication network. In this case, the server may be a server corresponding to the messaging APP, for example, an operator APP corresponding to the messaging APP. Alternatively, in this case, the server may be a vendor server corresponding to the mobile phone C 106. In addition, it may be understood that the server may be one server, or may be a cluster including a plurality of servers. This is not limited in this application. It may be understood that the reply message may include a user identifier, for example, may include a user identifier corresponding to the mobile phone A 101. The user identifier may include but is not limited to a user number, a device number, and the like. The device number may be further used to implement message encryption and decryption, and the like.

Step 803: The server stores the reply message. The server may include a plurality of microservices used to implement different functions, for example, may include but is not limited to a plurality of server persistent connection (connector) microservices, a chat (chat) message microservice, a third-party platform (mosd) connection microservice, and a BeiDou service microservice. It should be noted that different microservices may be deployed on a same server, or may be deployed on different servers in a server cluster.
(1) The connector microservice may be used to maintain a persistent connection between the server and each terminal device, so that the server communicates with each terminal device through a persistent connection channel. For example, the connector microservice may be used to maintain a persistent connection between the server and the second terminal device or the third terminal device, so that the server receives a reply message from the second terminal device and/or a reply message from the third terminal device through the persistent connection channel. For another example, the connector microservice may be further used to maintain a persistent connection between the server and the first terminal device, so that the first terminal device receives a reply message in a timely manner in an environment with a network.
(2) The chat message microservice may be used to store a message that needs to be sent to the terminal device and send the message to the terminal device after the persistent connection is established between the terminal device and the server. It may be understood that, the chat message microservice may enable the terminal device to receive a message in the environment with a network. In addition, the chat message microservice may send the message to the terminal device in an active delivery or passive delivery manner. This is not limited in this application. In addition, the chat message microservice may further configure message storage duration, for example, 7 days.
(3) The mosd microservice, for example, may implement connection to a BeiDou service platform.
(4) The BeiDou service microservice may be used to process a BeiDou service. For example, after the server receives the reply message sent by the second terminal device or the third terminal device, the BeiDou service microservice may be used to store the reply message in a BeiDou service letter box, so that the server sends the reply message to the terminal device through a BeiDou message channel after receiving a letter query request packet that is sent by the terminal device in a state without a network connection based on a letter query mechanism. In addition, due to factors such as a resource limitation of the BeiDou service, the BeiDou service microservice may be further used to indicate to process the BeiDou service based on a specification requirement of a BeiDou service configuration, to avoid excessive occupation of BeiDou service resources. The specification requirement of the BeiDou service configuration may include, for example, but is not limited to, a sending time interval, a quantity of replies, a reply time limit, and storage duration. In some embodiments, in a scenario in which the server detects that the first terminal device does not establish the persistent connection to the server, the server may store the reply message in the BeiDou service letter box, so that the first terminal device in the state without a network connection can implement communication through a satellite.

Based on a network connection status of the first terminal device, the following may include two manners: receiving without a network and receiving with a network. The following describes the manner of receiving without a network in step 804a to step 807b, and describes the manner of receiving with a network in step 805a to step 807c.

Step 804a: The first terminal device sends a letter query request packet to the satellite. It may be understood that the letter query request packet may carry a user identifier corresponding to the first terminal device.

Step 804b: The satellite sends the letter query request packet to the server based on the letter query request packet from the first terminal device. It may be understood that the letter query request packet may carry the user identifier corresponding to the first terminal device. It should be noted that the satellite may send the letter query request packet to the server through a BeiDou satellite terrestrial information processing center.

Step 804c: The server returns, based on the received letter query request packet, a reply message to the satellite when detecting that the reply message for the first terminal device is stored. It should be noted that the server may alternatively return the found reply message to the satellite through the BeiDou satellite terrestrial information processing center. In addition, the server may respond to the letter query request packet, and return an acknowledgment message, or may be understood as a receiving receipt.

Step 804d: The first terminal device receives the reply message delivered by the satellite.

Optionally, step 806: The first terminal device parses the reply message, and performs deduplication determining. For example, the first terminal device may perform deduplication determining based on, but not limited to, the following conditions: a BeiDou satellite message identifier, a message number, a message code, a message version number, a message source, a message sender, message sending time, and the like. It may be understood that the deduplication determining may avoid repeated message receiving and avoid repeated message quota statistics.

Step 807a: The first terminal device sends a receiving receipt to the satellite based on the received reply message. It may be understood that, in an environment without a network, the first terminal device may send the receiving receipt to the satellite in a form of a BeiDou short packet. The receiving receipt may carry an identifier of the reply message.

Step 807b: The satellite receives the receiving receipt from the first terminal device, and sends the receiving receipt to the server. It may be understood that the satellite may alternatively forward the receiving receipt to the server through the BeiDou satellite terrestrial information processing center.

Step 805a: The first terminal device establishes a persistent connection to the server. It may be understood that after connecting to a terrestrial communication network, the first terminal device may establish the persistent connection to the server.

Step 805b: The first terminal device receives the reply message sent by the server. For example, the first terminal device may receive the reply message actively delivered by the server based on the persistent connection channel; or the first terminal device may request the server, and the server responds to the request to deliver the reply message.

Optionally, step 806: The first terminal device parses the reply message, and performs deduplication determining. For example, the first terminal device may perform deduplication determining based on, but not limited to, the following conditions: a BeiDou satellite message identifier, a message number, a message code, a message version number, a message source, a message sender, message sending time, and the like. It may be understood that the deduplication determining may avoid repeated message receiving and avoid repeated message quota statistics.

Step 807c: The first terminal device sends a receiving receipt to the server based on the received reply message. The receiving receipt may carry an identifier of the reply message. For example, the first terminal device may send the receiving receipt based on the persistent connection to the server.

Step 808: The server deletes, based on the receiving receipt, the reply message that has been received by the first terminal device. For example, the server may delete, based on the identifier of the reply message carried in the receiving receipt, the message stored in the chat message microservice and/or the BeiDou service microservice in the server.

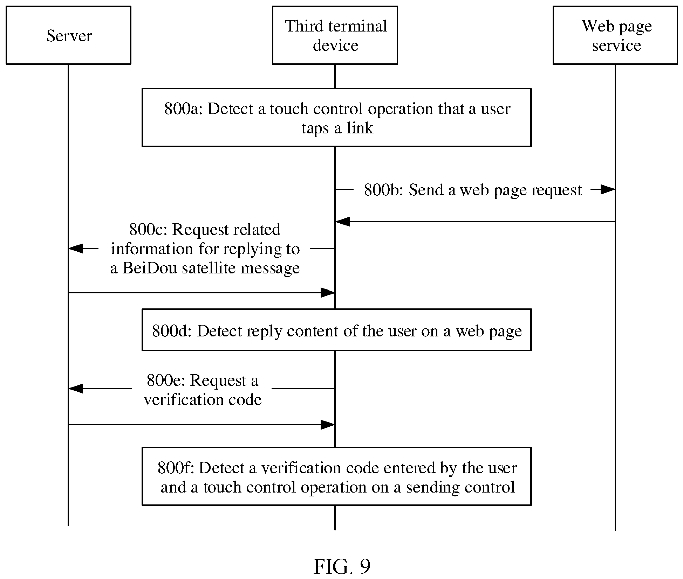

In a scenario in which the third terminal device replies to the BeiDou satellite message by using a web page interface, FIG. 9 is a schematic flowchart of a communication method according to an embodiment of this application. Before step 801 shown in FIG. 8, an implementation process of the third terminal device may further include the following procedure.

Step 800a: The third terminal device detects a touch control operation that a user taps a link.

Step 800b: The third terminal device sends a web page request to a web page service. The web page service may be used to provide a web page interface for the user, for example, an H5 page. The web page service may be provided by a server.

Step 800c: The third terminal device may further request, from the server, related information for replying to a BeiDou satellite message. For example, the related information for replying to the BeiDou satellite message may include but is not limited to: information about a sender of the BeiDou satellite message, a common reply, a version number of a common reply template, and the like. It may be understood that the third terminal device may display, based on a web page requested in step 800b and the related information for replying to the BeiDou satellite message requested in step 800c, a web page interface shown in the interface 530 in FIG. 5A to FIG. 5F.

In addition, in some embodiments, there may further be a reply time limit for replying to the BeiDou satellite message. Before loading the web page interface, the third terminal device may further detect whether the reply time limit is met. When the reply time limit is met, the third terminal device loads the related information for replying to the BeiDou satellite message. When the reply time limit is not met, the third terminal device redirects to an expiration prompt page in the web page interface.

Step 800d: The third terminal device detects reply content of the user on the web page. For example, the user may determine the reply content in a manner of selecting a preset reply from common replies.

Step 800e: The third terminal device requests a verification code from the server. For example, the user may enter, in the web page interface, a number of a recipient that received the BeiDou satellite message.

Step 800f: The third terminal device detects a verification code entered by the user and a touch control operation on a sending control. It may be understood that, the third terminal device may respond to the touch control operation on the sending control, and obtain a reply message of the user for the BeiDou satellite message described in step 801 shown in FIG. 8. For a subsequent implementation process, refer to the implementation process described in FIG. 8. Details are not described herein again.

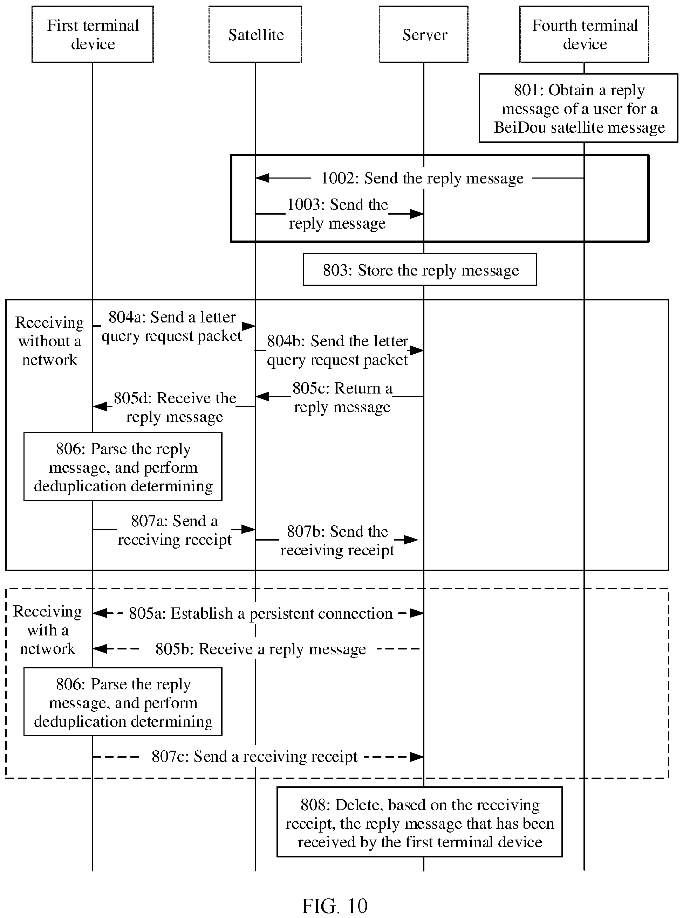

Based on content described in the foregoing scenario A3, scenario B1, and scenario B2, FIG. 10 is a schematic flowchart of a communication method according to an embodiment of this application. Different from the steps shown in FIG. 8, compared with step 802, the steps shown in FIG. 10 may include the following steps.

Step 1002: A fourth terminal device sends a reply message to a satellite. The third terminal device may be, for example, the mobile phone D 701 shown in FIG. 7. The mobile phone D 701 may reply to a BeiDou satellite message in a form of a BeiDou short packet in an environment without a network described in the scenario A3. For a specific implementation process, refer to the content described in the scenario A3. Details are not described herein again.

Step 1003: The satellite sends the reply message to a server. For example, with reference to the application scenario shown in FIG. 7, after receiving the reply message sent by the mobile phone D 701, the satellite may send the reply message to the server 104 through the BeiDou satellite terrestrial information processing center 103. In this way, the server 104 may store the reply message. In addition, after receiving the reply message, the server may store the reply message based on a BeiDou service microservice, so that a first terminal device receives the reply message in a manner of receiving without a network; and may further store the reply message based on a chat message microservice, so that the first terminal device receives the reply message in a manner of receiving with a network.

It may be understood that the first terminal device may obtain, from the server in the manner of receiving without a network described in step 804a to step 807b shown in FIG. 8, the reply message returned by the fourth terminal device; or may obtain, from the server in the manner of receiving with a network described in step 805a and step 807c shown in FIG. 8, the reply message returned by the fourth terminal device. For a specific implementation process, refer to the content described in FIG. 8. Details are not described herein again.

In some other embodiments, when sending a BeiDou satellite message, the first terminal device may further include indication information in the BeiDou satellite message, where the indication information may indicate whether the first terminal device has a satellite receiving capability. For example, when the indication information is indicated as 1, the indication information may indicate that the first terminal device has the satellite receiving capability; or when the indication information is indicated as 0, the indication information may indicate that the first terminal device does not have the satellite receiving capability. Correspondingly, a second terminal device, a third terminal device, or the fourth terminal device may display a reply interface based on the indication information. For example, when the indication information is indicated as 1, the display interface may include the "reply" control shown in the interface 420 or the interface 421 in FIG. 4A to FIG. 4E, or the reply link shown in the interface 500 in FIG. 5A to FIG. 5F; or when the indication information is indicated as 0, the display interface may not display the "reply" control shown in the interface 420 or the interface 421 in FIG. 4A to FIG. 4E, or the reply link shown in the interface 500 in FIG. 5A to FIG. 5F. In this way, more accurate communication can be implemented.

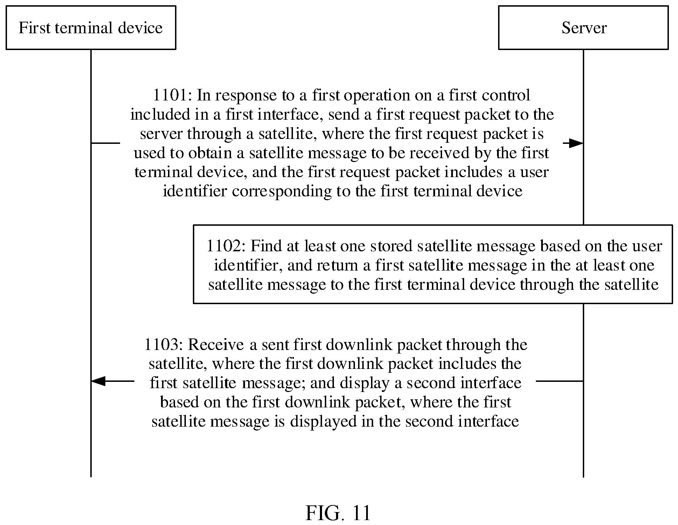

In some other implementations, FIG. 11 is a schematic flowchart of another communication method according to an embodiment of this application. The procedure may include the following steps.

Step 1101: In response to a first operation on a first control included in a first interface, a first terminal device sends a first request packet to a server through a satellite, where the first request packet is used to obtain a satellite message to be received by the first terminal device, and the first request packet includes a user identifier corresponding to the first terminal device.

Step 1102: The server finds at least one stored satellite message based on the user identifier corresponding to the first terminal device, and returns a first satellite message in the at least one satellite message to the first terminal device through a satellite.

Step 1103: The server receives a sent first downlink packet through the satellite, where the first downlink packet includes the first satellite message; and displays a second interface based on the first downlink packet, where the first satellite message is displayed in the second interface.

For a specific implementation procedure in FIG. 11, refer to the content described in the foregoing embodiments. Details are not described herein again.

Based on the foregoing embodiments, this application further provides a terminal device. The terminal device includes a plurality of functional modules. The plurality of functional modules interact with each other to implement functions performed by the terminal device in the methods described in embodiments of this application. The plurality of functional modules may be implemented based on software, hardware, or a combination of software and hardware, and the plurality of functional modules may be randomly combined or divided based on specific implementation. For example, step 801 and step 802 performed by the second terminal device or the third terminal device in the embodiment shown in FIG. 8 are performed. For another example, step 804a, step 805d to step 807a, or step 805a to step 807c performed by the first terminal device in the embodiment shown in FIG. 8 are performed. Alternatively, step 800a to step 800f performed by the third terminal device in the embodiment shown in FIG. 9 may be further performed. Alternatively, step 801 and step 1002 performed by the fourth terminal device in the embodiment shown in FIG. 10 are performed. Alternatively, step 804a, step 805d to step 807a, or step 805a to step 807c performed by the first terminal device in the embodiment shown in FIG. 10 are performed.

Based on the foregoing embodiments, this application further provides a terminal device. The terminal device includes at least one processor and at least one memory. The at least one memory stores computer program instructions. When the terminal device runs, the at least one processor performs functions performed by the terminal device in the methods described in embodiments of this application. For example, step 801 and step 802 performed by the second terminal device or the third terminal device in the embodiment shown in FIG. 8 are performed. For another example, step 804a, step 805d to step 807a, or step 805a to step 807c performed by the first terminal device in the embodiment shown in FIG. 8 are performed. Alternatively, step 800a to step 800f performed by the third terminal device in the embodiment shown in FIG. 9 may be further performed. Alternatively, step 801 and step 1002 performed by the fourth terminal device in the embodiment shown in FIG. 10 are performed. Alternatively, step 804a, step 805d to step 807a, or step 805a to step 807c performed by the first terminal device in the embodiment shown in FIG. 10 are performed. Based on the foregoing embodiments, this application further provides a computer program product. The computer program product includes a computer program (which may also be referred to as code or instructions). When the computer program is run, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. In this case, this application is intended to cover these modifications and variations of this application provided that they fall within the scope of protection defined by the following claims and their equivalent technologies.

## Claims

1. A communication system, wherein the system comprises a first terminal device and a server;
the first terminal device is configured to send a first request packet to a satellite in response to a first operation on a first control comprised in a first interface, wherein the first request packet is used to obtain a satellite message to be received by the first terminal device, and the first terminal device is in a state without a network connection;
the server is configured to receive the first request packet from the first terminal device through the satellite, wherein the first request packet comprises a user identifier corresponding to the first terminal device;
the server is further configured to: find at least one stored satellite message based on the user identifier, and return a first satellite message in the at least one satellite message to the first terminal device through the satellite; and
the first terminal device is further configured to: receive a first downlink packet sent by the satellite, wherein the first downlink packet comprises the first satellite message; and display a second interface based on the first downlink packet, wherein the first satellite message is displayed in the second interface.

2. The system according to claim 1, wherein the first downlink packet further comprises quantity indication information, the quantity indication information indicates a quantity of remaining to-be-received satellite messages, and the quantity indication information is further displayed in the second interface.

3. The system according to claim 1 or 2, wherein
the first interface further comprises a second satellite message, and the second satellite message indicates a satellite message sent by the first terminal device to at least one recipient;
the first satellite message is a reply message of a second terminal device corresponding to a first recipient for the second satellite message, and the first recipient is any one of the at least one recipient; and
that the first satellite message is displayed in the second interface comprises: the first satellite message is associatively displayed in the second interface based on the second satellite message.

4. The system according to any one of claims 1 to 3, wherein the system further comprises the second terminal device;
the second terminal device is configured to display a third interface, wherein the second satellite message from the first terminal device and a second control are displayed in the third interface, and the second control is used to reply to the second satellite message;
the second terminal device is further configured to display a fourth interface in response to a second operation on the second control, wherein the fourth interface is used to obtain reply content for the second satellite message;
the second terminal device is further configured to send a reply message in response to one or more third operations in the fourth interface, wherein the reply message comprises the reply content; and
the server is configured to receive and store the reply message from the second terminal device, wherein the reply message comprises the user identifier corresponding to the first terminal device.

5. The system according to claim 4, wherein
that the second terminal device is configured to send a reply message comprises: sending the reply message through the satellite; and
that the server is configured to receive the reply message from the second terminal device comprises: receiving the reply message from the second terminal device through the satellite.

6. The system according to claim 4 or 5, wherein the third interface further comprises a third control, the third control is used to send a second request packet to the satellite, and the second request packet is used to obtain a satellite message to be received by the second terminal device.

7. The system according to any one of claims 4 to 6, wherein the third interface is an interface of an instant messaging application APP; and
the second control is used to jump to the fourth interface provided by the instant messaging APP.

8. The system according to claim 7, wherein the second satellite message further comprises indication information, and the indication information indicates that the first terminal device has a satellite message receiving capability; and
the displaying a third interface comprises: displaying the second control based on the indication information.

9. The system according to any one of claims 4 to 6, wherein the third interface is an interface of a messaging APP;
the second control is used to jump to the fourth interface provided in a web page form; and
the sending a reply message in response to one or more third operations in the fourth interface comprises: displaying a fifth interface in response to the one or more third operations in the fourth interface, wherein the fifth interface indicates to perform identity verification by using a number of a recipient that receives the second satellite message; detecting success of the verification, and sending the reply message in response to success of the verification.

10. The system according to claim 9, wherein the second satellite message further comprises indication information, and the indication information indicates that the first terminal device has a satellite message receiving capability; and
the displaying a third interface comprises: displaying the second control based on the indication information.

11. The system according to claim 9 or 10, wherein the second control is in a link form.

12. The system according to any one of claims 1 to 11, wherein the first satellite message is a BeiDou satellite message.

13. A communication method, applied to a first terminal device, wherein the first terminal device is in a state without a network connection, and the method comprises:
sending a first request packet to a satellite in response to a first operation on a first control comprised in a first interface, wherein the first request packet is used to obtain a BeiDou satellite message to be received by the first terminal device;
receiving a first downlink packet delivered by the satellite, wherein the first downlink packet comprises a first satellite message; and
displaying a second interface based on the first downlink packet, wherein the first satellite message is displayed in the second interface.

14. The method according to claim 13, wherein the first downlink packet further comprises quantity indication information, the quantity indication information indicates a quantity of remaining to-be-received satellite messages, and the quantity indication information is further displayed in the second interface.

15. The method according to claim 13 or 14, wherein
the first interface further comprises a second satellite message, and the second satellite message indicates a satellite message sent by the first terminal device to at least one recipient;
the first satellite message is a reply message of a second terminal device corresponding to a first recipient for the second satellite message, and the first recipient is any one of the at least one recipient; and
that the first satellite message is displayed in the second interface comprises: the first satellite message is associatively displayed in the second interface based on the second satellite message.

16. The method according to claim 15, wherein the second satellite message further comprises indication information, and the indication information indicates that the first terminal device has a satellite message receiving capability.

17. A communication method, comprising:
receiving, by a server, a first request packet from a first terminal device through a satellite, wherein the first request packet comprises a user identifier corresponding to the first terminal device; and
finding, by the server, at least one stored satellite message based on the user identifier, and returning a first satellite message in the at least one satellite message to the first terminal device through the satellite.

18. The method according to claim 17, wherein before the receiving, by a server, a first request packet from a first terminal device through a satellite, the method further comprises:
receiving and storing a reply message from a second terminal device, wherein a recipient identifier of the reply message is the user identifier.

19. A communication method, applied to a second terminal device and comprising:
displaying a first interface, wherein a first satellite message from a first terminal device and a first control are displayed in the first interface, and the first control is used to reply to the first satellite message;
displaying a second interface in response to a first operation on the first control, wherein the second interface is used to obtain reply content for the first satellite message; and
sending a reply message in response to one or more second operations in the second interface, wherein the reply message comprises the reply content.

20. The method according to claim 19, wherein the sending a reply message comprises:
sending the reply message through a satellite.

21. The method according to claim 20, wherein the first interface further comprises a second control, the second control is used to send a first request packet to the satellite, and the first request packet is used to obtain a satellite message to be received by the second terminal device.

22. The method according to any one of claims 19 to 21, wherein the first interface is an interface of an instant messaging application APP; and
the first control is used to jump to the second interface provided by the instant messaging APP.

23. The method according to claim 22, wherein the first satellite message further comprises indication information, and the indication information indicates that the first terminal device has a satellite message receiving capability; and
the displaying a first interface comprises: displaying the first control based on the indication information.

24. The method according to any one of claims 19 to 21, wherein the first interface is an interface of a messaging APP;
the first control is used to jump to the second interface provided in a web page form; and
the sending a reply message in response to one or more second operations in the first interface comprises: displaying a third interface in response to the one or more second operations in the first interface, wherein the third interface indicates to perform identity verification by using a number of a recipient that receives the first satellite message; detecting success of the verification, and sending the reply message in response to success of the verification.

25. The method according to claim 24, wherein the first satellite message further comprises indication information, and the indication information indicates that the first terminal device has a satellite message receiving capability; and
the displaying a first interface comprises: displaying the first control based on the indication information.

26. The method according to claim 24 or 25, wherein the first control is in a link form.

27. A terminal device, comprising at least one processor, wherein the at least one processor is coupled to at least one memory, and the at least one processor is configured to read a computer program stored in the at least one memory, to perform the method according to any one of claims 13 to 16, or perform the method according to any one of claims 19 to 26.

28. A server, comprising at least one processor, wherein the at least one processor is coupled to at least one memory, and the at least one processor is configured to read a computer program stored in the at least one memory, to perform the method according to claim 17 or 18.

29. A computer-readable storage medium, wherein the computer-readable storage medium stores instructions, and when the instructions are run on a computer, the computer is enabled to perform the method according to any one of claims 13 to 16, perform the method according to claim 17 or 18, or perform the method according to any one of claims 19 to 26.

30. A computer program product comprising instructions, wherein when the computer program product runs on a computer, the computer is enabled to perform the method according to any one of claims 13 to 16, perform the method according to claim 17 or 18, or perform the method according to any one of claims 19 to 26.
